# EUROPÄISCHE PATENTSCHRIFT

(11) **EP 3 355 688 B1**
(45) Veröffentlichungstag und Bekanntmachung des Hinweises auf die Patenterteilung: **08.01.2020**
(21) Anmeldenummer: 16760740.7
(22) Anmeldetag: 06.09.2016
(51) Int. Cl.: A01J 5/04, A01J 5/16, A01J 9/02, A01J 9/04, A01J 5/08, A01J 7/02, A01J 7/04

(54) **MELKANLAGE UND DAZUGEHÖRIGES BETRIEBSVERFAHREN**
MILKING INSTALLATION AND ASSOCIATED OPERATING METHOD
INSTALLATION DE TRAITE ET PROCÉDÉ DE FONCTIONNEMENT ASSOCIÉ

(30) Priorität: 28.09.2015 DE 102015116333
(43) Veröffentlichungstag der Anmeldung: 08.08.2018
(73) Patentinhaber: Fischer, Friedrich, 71299 Wimsheim (DE)
(72) Erfinder: Fischer, Friedrich, 71299 Wimsheim (DE)
(74) Vertreter: Spachmann, Holger
(86) Internationale Anmeldenummer: PCT/EP2016/070998
(87) Internationale Veröffentlichungsnummer: WO 2017/055030

(56) Entgegenhaltungen:
- EP-A1- 2 625 953
- EP-A2- 1 795 069

## Beschreibung

Die Erfindung betrifft eine Melkanlage zum Melken von Tieren, wie zum Beispiel Kühen, Ziegen, Schafen, Pferde oder Esel, mit einem Melkgeschirr und im Melkgeschirr verwendeten Zitzengummis sowie ein dazugehöriges Betriebsverfahren.

### STAND DER TECHNIK

Eine Melkanlage oder eine Melkmaschine sind in einem landwirtschaftlichen Betrieb verwendete Anlagen oder Maschinen zum Melken von Nutztieren, insbesondere Kühen, um Milch aus einem Euter zu gewinnen. Je nach Stalltyp gibt es fest eingebaute Melkanlagen mit Melkständen oder Melkrobotern oder transportable Melkmaschinen, die beispielsweise auf zwei oder vier Rädern transportabel sind, und die zum Melken einer oder mehrerer Tiere dienen.

Eine gattungsgemäße Melkanlage oder Melkmaschine weist eine, insbesondere mehrere Melkgeschirre auf, die in der Regel zwei oder vier Zitzenbecher umfassen, die die Zitzen des zu melkenden Tieres aufnehmen. An den Zitzenbechern sind Milchschläuche angeschlossen, die zu einer Milchsammeleinrichtung des Melkgeschirrs führen, und dort über einen zentralen Milchschlauch die Milch zu einem Milchsammelbehälter abführen.

Jeder Zitzenbecher weist einem zylindrischen Hohlkörper, meist aus Edelstahl oder Kunststoff auf, dessen oberes Ende offen ist und an dessen unterem Ende eine Anschlussstelle für einen Milchschlauch und gegebenenfalls für eine Pulsatorleitung angeordnet ist. Im Inneren des Zitzenbechers ist ein Zitzengummi eingesetzt, der die obere Öffnung des Zitzenbechers überstülpt, und der die zu melkende Zitze aufnimmt. Durch die Pulsatorleitung kann im Raum zwischen Zitzenbecher und Zitzengummi ein Unterdruck erzeugt werden, so dass durch eine Vibration des Zitzengummis die Zitze massiert und dadurch die Milchabgabe stimuliert werden kann. Durch einen pulsierenden Unterdruck wird somit die Milchabgabe angeregt. Zitzengummis können üblicherweise aus Gummi oder Silikon bestehen.

Aus dem Stand der Technik ist beispielsweise aus der EP 477 950 A1 ein Zitzengummi bekannt, der in einem Zitzenbecher aufgenommen werden kann, und eine besonders robuste Verbindung und lange Haltbarkeit aufweist.

In der modernen Milchwirtschaft geht der Trend dahin gehend, dass Milch, die bisher zum Abtöten von Keimen temperatur- oder chemisch behandelt worden ist bzw. zu Sterilisationszwecken mit UV-Licht behandelt wurde, naturbelassen als ökologische Milch ohne derartige Nachbehandlungsschritte als sogenannte Ökomilch in den Handel gebracht wird. Hierbei spielt die Hygiene eine wesentliche Rolle für die Haltbarkeitsdauer des Milchroherzeugnisses, da eindringende Keime die Haltbarkeit verkürzen und die Qualität des Endproduktes schädigen können.

Beim heutigen Stand der Technik wird durch Ansetzen der Zitzenbecher und beim Absetzen des Melkgeschirrs mikroben- und keimbelastete Luft aus dem Stall angesaugt und verunreinigt die aus dem Euter fließende keimfreie Rohmilch. In einer üblichen Stallluft befinden sich Staubpartikel verschiedenster Größe, Hefe- und Schimmelpilze sowie diverse Viren- und Bakterienkeime, die die Haltbarkeit der Rohmilch deutlich herabsetzen.

Im Stand der Technik sind Maßnahmen bekannt, um eine Verunreinigung und Kontamination von Rohmilch durch in der Stallluft befindlichen Staub und organische Fremdstoffe zu verringern. So ist beispielsweise aus der DE 10 2004 019 728 A1 ein Melkzeug bekannt, das eine Lufteinlasssteuerung aufweist, in der ein Ringfilter vorgesehen ist, durch die Luft in den Zitzenbecher einströmen kann, die durch den Ringfilter strömt. Allerdings wird beim Abnehmen eines derartigen Zitzenbechers nicht verhindert, dass Stallluft in die obere Öffnung eindringt und somit Krankheitserreger und Staubpartikel beim Einsetzen der Zitze im Zitzenbecher verbleibt und die Rohmilch verunreinigt.

Des Weiteren ist aus der DE 101 60 161 A1 ein Melkgeschirr und ein Melkverfahren bekannt, bei dem durch eine Luftverbindungsleitung Reinigungs- und Desinfektionsmittel zugeführt werden kann, wobei ein Luftfilter zur Reinigung von Reinigungsdruckluft vorgesehen sein kann. Allerdings wird auch bei diesem Melkgeschirr und Melkverfahren vor dem Aufsetzen der Zitzenbecher auf eine Zitze nicht verhindert, dass kontaminierte Stallluft in das Melkgeschirr eindringen kann und somit die Rohmilch kontaminiert werden kann.

In der EP 743 818 B1 ist ein Melkgeschirr beschrieben, bei der im Becherboden oder vom Becherboden ausgehend durch einen Pulsierraum hindurch nach oben eine Luftansaugleitung geführt werden kann, durch die eine durch einen Karbonfilter geleitete Luft in den Zitzenbecher geführt werden kann, um das Eindringen von kontaminierter Stallluft zu reduzieren. In der Regel herrscht im Zitzenbecher ein Unterdruck, der im oberen Bereich auf bis zu 5 kPa verringert werden kann, so dass eine Leckluftströmung der Stallluft reduziert, jedoch nicht gänzlich verhindert werden kann. Das Strömungsvolumen der gefilterten Luft ist kleiner als die Menge der durch ein Milchsaugvakuum abgeführten Luft, so dass weiterhin Stallluft in den Zitzenbecher eindringen kann. Die durch den Pulsierraum geführte Luftleitung durchdringt den Zitzengummi und kann zu Druckstellen am Euter oder einer Zitze des zu melkenden Tieres führen. Des Weiteren wird der Innendurchmesser des Zitzenbechers durch die im Becherinneren geführte Luftleitung verringert. Daneben müssen Zitzenbecher konstruktiv für eine derartige vom Becherboden nach oben führende Luftzuleitung vorgesehen sein, eine Nachrüstung eines üblichen Melkgeschirrs ist nicht möglich. Daher ist es auch bei dem in dieser Druckschrift vorbekannten Melkgeschirr möglich, dass ein Leckluftstrom einströmt, und nur eine geringe Menge von Bakterien oder organischen Verunreinigungen können dazu führen, dass die gesamte Rohmilch in einem Milchsammelbehälter verunreinigt wird, und deren Haltbarkeit deutlich herabgesetzt wird. Des Weiteren wird der Innenraum des Zitzenbechers verkleinert und der Melkkomfort für ein zu melkendes Tier herabgesetzt. Ein Nachrüsten vorbekannter Zitzenbecher ist nicht möglich.

Zunehmend werden Produkte, insbesondere Käse aus unbehandelter Rohmilch hergestellt, des Weiteren findet Biomilch ohne künstliche Haltbarkeitsstoffe oder Bearbeitungsschritte zur Verlängerung der Haltbarkeit starkes Interesse bei Endverbrauchern. Eine natürliche Verbesserung der Haltbarkeit durch Kontaminationsschutz der Milch ermöglicht, dass Landwirte zur Selbstvermarktung übergehen können und somit höhere Milchpreise erzielen, um wirtschaftlich langfristig höhere Erträge erwirtschaften zu können. Aufwendige und energieintensive Nachbearbeitungsschritte können entfallen.

EP 2 625 953 A1 und EP 1 795 069 A2 offenbaren eine Melkanlage, wobei im Kopfbereich des Zitzengummis ein Mündungsabschnitt einer Sterilluft-Druckleitung angeordnet ist.

Es ist Aufgabe der Erfindung, eine Melkanlage, und ein Melkverfahren vorzuschlagen, die eine erhöhte Verbesserung der Haltbarkeit von Rohmilch ohne aufwendige Nachbearbeitungsschritte erreicht und somit ein hochwertiges, natürliches Lebensmittelprodukt bereitstellt, wobei die oben genannten Nachteile des Stands der Technik überwunden werden.

Diese Aufgabe wird durch eine Melkanlage und ein Melkverfahren nach den unabhängigen Ansprüchen 1 und 14 gelöst. Vorteilhafte Ausbildungen der Erfindung sind Gegenstand der Unteransprüche.

### OFFENBARUNG DER ERFINDUNG

Ein Melkgeschirr wird vorgeschlagen, das zumindest ein, insbesondere zwei oder vier Zitzenbecher umfasst, wobei jeder Zitzenbecher ein Bechergehäuse und einen im Bechergehäuse aufgenommenen Zitzengummi mit einem Kopfbereich und einem Saugbereich aufweist. Am Becherboden oder am Ende des Saugbereichs des Zitzengummis ist ein Anschluss für einen Milchschlauch angeordnet. Bevorzugt ist an einem Wand- oder Bodenabschnitt des Bechergehäuses ein Anschluss für eine Pulsatorleitung angeordnet, um einen Melkvorgang zu stimulieren.

Es wird vorgeschlagen, dass im Kopfbereich des Zitzengummis ein Mündungsabschnitt einer Sterilluft-Druckleitung angeordnet ist, durch die Sterilluft mit einem Volumenstrom größer als ein Fluidabsaugvolumenstrom am Milchschlauch einleitbar ist, so dass sich im Kopfbereich des Zitzengummis eine Sterilluftüberlagerung einstellt.

Mit anderen Worten wird ein Milchgeschirr vorgeschlagen, wobei jeder Zitzenbecher des Milchgeschirrs einen Zitzengummi aufweist, und am Kopfbereich des Zitzengummis eine Sterilluft-Druckleitung in einem Mündungsabschnitt endet. Durch die Sterilluft-Druckleitung wird eine Sterilluft, d. h. eine Luft mit hohem Reinheitsgrad, bei dem Staubpartikel und biologische Verunreinigungen, insbesondere Bakterien und Viren, ausgefiltert sind, mit einem gegenüber der Atmosphärenluft und gegenüber einem im Zitzenbecher im Einsatz herrschenden Unterdruck in den Kopfbereich des Zitzengummis mit Überdruck eingeblasen, so dass verhindert wird, dass Stallluft in das Innere des Zitzenbechers gelangen kann. Vorteilhaft ist, dass die Sterilluft-Druckleitung von außen am Zitzenbecher herangeführt und im Kopfbereich des Zitzengummis endet, so dass beispielsweise vorhandene Zitzenbecher mit Zitzengummis nachgerüstet werden können, und vorhandene Milchgeschirre mit geringen Kosten umgerüstet werden können. Im Inneren des Zitzenbechers finden keine konstruktiven Veränderungen statt, so dass die Zitze ungestört im Becherinneren aufgenommen und durch die Pulsation gemolken werden kann.

Erfindungswesentlich ist, dass ein Absaugfluid-Volumenstrom, der zum Absaugen von gemolkener Milch am Milchschlauch herrscht, kleiner ist als ein zugeführter Volumenstrom an Sterilluft, die über den Kopfbereich des Zitzengummis eingeleitet wird. Somit ist das Innere des Zitzenbechers ständig mit einem Überdruck an Sterilluft gefüllt, so dass keine Verunreinigungen durch die Stallluft eindringen können, dies wird als Sterilluftüberlagerung bezeichnet. Da die Sterilluft im Kopfbereich des Zitzengummis eingeleitet wird, wird beim Einführen der Zitze in den Milchbecher der Saugbereich des Zitzengummis vom Kopfbereich durch die Zitze abgedichtet. Die Sterilluft wird während des Melkvorgangs am Kopfbereich weiterhin eingeblasen bzw. bildet dort einen geringfügigen Überdruck oder entweicht über geeignete Maßnahmen, während im Bodenabschnitt des Bechergehäuses ein Unterdruck herrscht, um abfließende gemolkene Milch zu einem Milchsammelbehälter abführen zu können. Beim gesamten Melkvorgang kommt die Milch nicht mit der Stallluft in Berührung, sondern lediglich mit Sterilluft, wobei die aus dem Euter fließende Milch biologisch unbehandelt und hygienisch keimfrei bleibt.

Mit dem Melkgeschirr wird eine praktisch keimfreie Rohmilch gewonnen, die eine erhöhte Haltbarkeit aufweist, und somit über eine deutlich verlängerte Zeit ohne Weiterbehandlung gelagert werden kann. Hierdurch lassen sich beispielsweise Käse, Kefir oder andere Milchprodukte sowie Rohmilch über längere Zeit lagern, und die Gesamtverarbeitung kann weniger energiereich und mit wenigeren Arbeitsschritten durchgeführt werden, wobei beispielsweise längere Reifeprozesse erreicht werden können, und ein natürliches und unbehandeltes Naturprodukt bereitgestellt werden kann.

In der Regel herrscht im unteren Bereich eines Zitzenbechers ein Unterdruck von etwa 25 kPa gegenüber dem atmosphärischen Luftdruck von in der Regel 1.013 hPa. Ist die Zitze in den Zitzenbecher aufgenommen, so kann sich im unteren Bereich ein Unterdruck von etwa 40 kPa bis 80 kPa einstellen. Am oberen Zitzenbecher herrscht ohne Sterilluftüberlagerung ein Unterdruck von in der Regel 10 kPa bis 30 kPa. Somit ist in den Kopfbereich des Zitzenbechers ein Volumenstrom von Sterilluft einzuleiten, der einen Überdruck von mindestens 20 kPa bis 40 kPa, bis zu 60kPa erreicht, um eine Sterilluftüberlagerung sicherzustellen.

Eine Sterilluftüberlagerung bedeutet in diesem Fall, dass ein Überdruck an Sterilluft im Öffnungsbereich des Zitzenbechers herrscht, so dass kontaminierte Stallluft in das Innere des Zitzenbechers nicht eindringen kann. Dadurch wird sichergestellt, dass bei der Abnahme des Melkgeschirrs sowie beim Aufsetzen des Melkgeschirrs keine verunreinigenden Keime oder Staubpartikel in den Zitzenbecher gelangen können, um somit die Rohmilch zu verunreinigen.

In einer vorteilhaften Weiterbildung des Melkgeschirrs kann im Kopfbereich des Zitzengummis ein ringförmiger Zitzenaufnahmebereich mit einer Zitzenaufnahmeöffnung als Ringraum ausgebildet sein, und der Mündungsabschnitt an einem Wandbereich des Ringraums angeordnet sein. Ein Ringraum bedeutet, dass im Kopfbereich des Zitzengummis auch bei aufgenommener Zitze weiterhin ein luftdurchströmtes, ringförmiges Volumen um die aufgenommene Zitze existiert, in der der Sterilluftüberdruck herrscht, und ein Eindringen von Fremdstoffen verhindert. Der Zitzenaufnahmebereich ermöglicht des Weiteren eine erleichterte Aufnahme der Zitze, da durch die ringförmige Ausgestaltung eine Aufnahmelippe der Zitze des Zitzengummis definiert ist, in der die Zitze leicht aufgenommen und bequem geführt werden kann. Im Ringraum kann der Überdruck durch die Sterilluft-Druckleitung eingestellt werden, wobei der Mündungsabschnitt entweder an einer einzelnen Stelle oder an mehreren gleich verteilt um den Umfang des Ringraums angeordneten Stellen in den Ringraum eingeblasen werden kann.

In einer vorteilhaften Weiterbildung kann der Saugbereich des Zitzengummis beginnend vom Kopfbereich zumindest bereichsweise konisch und in Richtung Milchschlauchanschluss verjüngt ausgeformt sein. Dadurch, dass der Saugbereich des Zitzengummis konisch und in Richtung Milchschlauchanschluss verjüngt ist, wird beim Einführen einer Zitze der Milchschlauchanschlussabschnitt des Saugbereichs vom oberen Kopfbereich luftdicht getrennt. Hierdurch kann im oberen Kopfbereich weiterhin ein Überdruck an Sterilluft herrschen, während im unteren Saugbereich ein Unterdruck im Milchschlauch erzeugt durch eine Milchförderpumpe eingestellt werden kann, um Milch in einen Milchsammelbehälter zu leiten. Durch die konische Ausformung des Zitzengummis wird beim Einführen der Zitze somit eine Trennung zwischen dem Sterilluft-Überdruckbereich und dem Melkunterdruckbereich im Zitzenbecher ausgebildet, so dass eine erhöhte Förderleistung bei gleichzeitiger hermetischer Sterilluftüberlagerung erreicht werden kann.

In einer vorteilhaften Weiterbildung kann der Mündungsabschnitt des Zitzengummis eine Düse zur gerichteten Sterilluftführung in Richtung einer Zitzenaufnahmeöffnung umfassen. Die Düse kann derart ausgestaltet sein, dass sie dem Sterilluftstrom, der in das Kopfende des Zitzengummis einströmt, gerichtet in Richtung Zitzenaufnahmeöffnung des Zitzengummis leitet und dabei gefächert derart ausformt, dass eine vollumfängliche Sterilluftüberlagerung der Zitzenaufnahmeöffnung erreicht werden kann. Hierdurch kann effektiv das Eindringen von Kontamination in den Zitzenbecher verhindert werden.

Vorteilhafterweise wird vorgeschlagen, dass die Sterilluft-Druckleitung an einem Außenwandabschnitt des Bechergehäuses geführt und befestigt bzw. im Außenwandabschnitt integriert ist. Beim Aufsetzen des Zitzenbechers auf eine Zitze kann durch Befestigung der Sterilluft-Druckleitung am Außenwandabschnitt des Bechergehäuses ein vereinfachtes Handling des Melkgeschirrs erreicht werden. Hierdurch wird erreicht, dass die Sterilluft-Druckleitung parallel zur Milchschlauch- oder Pulsatorleitung geführt wird und somit ein vereinfachter Melkvorgang erreicht werden kann. Die Leitungen des Zitzenbechers führen somit vom Becherboden weg hin zur Milchsammeleinrichtung des Melkgeschirrs. Die Sterilluft-Druckleitung kann an einem Außenwandabschnitt des Zitzenbechers geklebt, geklammert, geschraubt oder mit Überlegmitteln befestigt sein und kann vorteilhafterweise mit dem Milchschlauch oder einer Pulsatorleitung im unteren Becherbodenbereich befestigt sein, so dass das Melkgeschirr leicht handhabbar ist. Dadurch kann die Geschwindigkeit beim Umsetzen des Melkgeschirrs, beim Einführen der Zitzen und beim Abnehmen des Melkgeschirrs vereinfacht werden.

Vorteilhafterweise kann eine Sterilluft-Verteilereinheit mit einem Sterilluft-Zentraldruckleitungsanschluss an einer Milchsammeleinrichtung des Melkgeschirrs angeordnet sein, von der aus eine Sterilluft-Druckleitung zu jedem Zitzenbecher abzweigt. Üblicherweise umfasst ein Melkgeschirr eine Milchsammeleinrichtung, zu der die einzelnen Milchschläuche der Zitzenbecher abzweigen, und in der beispielsweise auch eine Verteilereinheit für die Pulsatorleitungen vorgesehen ist. Es wird vorteilhaft vorgeschlagen, dass eine Sterilluft-Verteilereinheit an der Milchsammeleinrichtung angeordnet sein kann, in der ein Sterilluft-Zentraldruckleitungsanschluss mündet, mit der Sterilluft mit hohem Druck herangeführt werden kann. Von dort aus verzweigen die Sterilluftverteileinheiten an die einzelnen Zitzenbecher, dabei kann vorteilhafterweise in dem Sterilluft-Zentraldruckleitungsanschluss eine Regelung des Drucks vorgesehen sein, insbesondere kann eine Differenzdruckregelung zwischen zentralem Milchschlauchanschluss und Sterilluft-Druckverteilung vorgesehen sein, um eine zuverlässige Sterilluftüberlagerung im Mündungsbereich der Zitzenbecher gewährleisten zu können. Somit können Milchschlauch und Sterilluft-Druckleitung parallel zu jedem Zitzenbecher geführt werden.

In einem nebengeordneten Aspekt wird ein Zitzengummi zur Verwendung in einem vorgenannten Milchgeschirr vorgeschlagen, der einen Kopfbereich und einen Saugbereich aufweist. Am Kopfbereich des Zitzengummis ist ein Mündungsabschnitt für eine Sterilluft-Druckleitung angeordnet, wobei der Kopfbereich bevorzugt einen ringförmigen Zitzenaufnahmebereich als Ringraum aufweist, an dessen Wandung der Mündungsabschnitt angeordnet ist. Weiterhin ist bevorzugt der Saugbereich zumindest abschnittsweise, beginnend vom Kopfbereich, konisch Richtung Milchschlauchanschluss verjüngt. Somit wird passend zum vorgenannten Melkgeschirr ein Zitzengummi vorgeschlagen, der in einen Zitzenbecher des Milchgeschirrs ausgenommen werden kann. In einem Kopfbereich des Zitzengummis ist ein Mündungsabschnitt für eine Sterilluft-Druckleitung vorgesehen, durch die Sterilluft mit einem Volumenstrom eingeführt werden kann, der höher als der Volumenstrom ist, der durch die Milchanschlussleitung abgesaugt wird. Dadurch stellt sich im Zitzenbecher ein Überdruck an Sterilluft ein, so dass kontaminierte Stallluft nicht eindringen kann. Der Zitzengummi kann insbesondere zur Nachrüstung von bereits vorhandenen Melkgeschirren eingesetzt werden, wobei lediglich eine Sterilluft-Druckluftleitung an die Zitzenbecher heranzuführen ist, und im Kopfbereich der Zitzengummis angeschlossen zu werden. Hierdurch können bereits vorhandene Melkgeschirre in erfinderischer Weise nachgerüstet werden, oder bei Defekt eines Zitzengummis dieser ausgetauscht werden.

In einer vorteilhaften Weiterbildung kann der Zitzengummi im Wandungsabschnitt des Ringraums ein Überdruckventil aufweisen oder die Zitzenaufnahmeöffnung einen umgebenden Wandabschnitt des Ringraums aufweisen, der eine derartige Elastizität aufweist, dass bei eingeführter Zitze eine Überdruckventilfunktion bereitgestellt werden kann. Alternativ oder zusätzlich kann ein Radius der Zitzenaufnahmeöffnung des Zitzengummis größer als ein durchschnittlicher Zitzenradius eines zu melkenden Tieres ausgebildet sein. Beim Einführen einer Zitze in den Zitzengummi verschließt üblicherweise die Zitze den Kopfbereich gegenüber dem Absaugbereich der Milch im Zitzenbecher, so dass im unteren Bereich ein Vakuum herrscht, durch die die gemolkene Milch abgesaugt werden kann und im oberen Kopfbereich ein Überdruck durch die Sterillufteinführung herrscht. Um insbesondere den Tragekomfort für das Nutztier zu verbessern, und ein unbeabsichtigtes Ablösen des Zitzenbechers von der Zitze zu verhindern, kann ein Druckventil vorgesehen sein, das einen evtl. aufbauenden Überdruck an Sterilluft im Kopfbereich ableiten kann. Des Weiteren oder alternativ hierzu kann der Wandabschnitt, der die Zitzenaufnahmeöffnung berandet, aus einem Material höherer Elastizität hergestellt sein, so dass bei entstehendem Überdruck über die Nachgiebigkeit des Berandungsbereichs Sterilluft entweichen kann. Letztlich kann auch der Aufnahmebereich der Zitzenaufnahmeöffnung einen Radius aufweisen, der größer ist als ein durchschnittlicher Zitzenradius des Nutztiers, so dass während des Melkvorgangs Sterilluft im Übergangsbereich zwischen Euter und Zitze entweichen kann und somit ein Eindringen von Stallluft verhindert wird, und kein unangenehmer Überdruck im Kopfbereich des Zitzenbechers aufgebaut wird. Dies erhöht den Tragekomfort und die Handhabung des Melkgeschirrs und verhindert ein ungewolltes Abfallen des Zitzenbechers beim Melkvorgang.

In einem weiteren nebengeordneten Aspekt wird eine Melkanlage vorgeschlagen, die zumindest ein Melkgeschirr nach einem der vorangehenden Ausführungsbeispiele umfasst. Zumindest eine Sterilluft-Zentraldruckleitung ist zumindest mit einer Sterilluft-Filteranlage umfasst, durch die jede Sterilluft-Druckleitung des Melkgeschirrs zentral mit Sterilluft versorgt wird, wobei ein Sterilluftvolumenstrom in jeder Sterilluft-Druckleitung einstellbar ist, der höher als ein Fluidabsaugvolumenstrom in jedem Milchschlauch ist, so dass sich eine Sterilluftüberlagerung in jedem Zitzenbecher des Melkgeschirrs einstellt. Die Melkanlage kann ein einzelnes Melkgeschirr oder eine Mehrzahl von Melkgeschirren in benachbarten Melkständen umfassen, wobei eine zentrale Sterilluft-Filteranlage, oder für jedes einzelne Melkgeschirr, oder einer Gruppen von Melkgeschirren eine einzelne Melkluftfilteranlage zugeordnet ist, durch die Sterilluft in eine Druckleitung an den Kopfbereich der Zitzenbecher geführt wird, um ein Eindringen von Stallluft in den Zitzenbecher zu verhindern. Dabei ist wesentlich, dass der Volumenstrom der Sterilluft, die durch die Sterilluft-Druckleitung in den Kopfbereich des Zitzenbechers geführt wird, höher ist als ein Fluidabsaugvolumenstrom eines Milchschlauchs ist, der die Milch aus dem Zitzenbecher abführt, so dass sich in einem Wechselzeitraum, in der kein Melkvorgang stattfindet, eine Sterilluftüberlagerung in den Zitzenbecher einstellt, so dass keine Verunreinigungen eindringen können.

Gattungsgemäße Melkanlagen weisen eine Milch-Zentralleitung und eine zentral Pulsatorleitung, durch die Milch des Zitzenbechers abgeführt wird, und durch die ein Unterdruck zur Massage der Zitzen hergestellt werden kann. Eine derartige Melkanlage kann durch eine Sterilluft-Zentraldruckleitung erweitert werden, um die Sterilluftüberlagerung bereitstellen zu können.

Es ist denkbar, dass ein Differenzdruckeinrichtung vorgesehen ist, die ein Differenzdruck zwischen Milch-Zentralleitung und Sterilluft-Zentraldruckleitung oder zwischen Milchschlauch-Zentralanschluss und Sterilluft-Zentraldruckleitungsanschluss jedes Melkgeschirrs überwachen kann, um eine Sterilluftzuführung in die Sterilluft-Zentraldruckleitung oder zur Sterilluft-Zentraldruckleitungsanschluss derart zu regeln, dass eine kontinuierliche Sterilluftüberlagerung gewährleistet bleibt.

Vorteilhafterweise kann die Sterilluft-Filteranlage einen EPA-/HEPA- oder eine UPA-Filtereinheit mit einer Filterklasse H13, bevorzugt H14 bzw. Class 100 oder höher umfassen, wobei bevorzugt die sterile Filteranlage eine regelbare Sterilluft-Kompressoreinheit umfasst. Schwebstofffilter, die zur Ausführung der Erfindung besonders gut geeignet sind, sind sogenannte HEPA-Filter (highefficiency particulate arrestance filter) oder sogenannte ULPA-Filter (ultra low penetration air filter). Filter dieser Klassen werden zur Ausfilterung von Viren, lungengängigen Stäuben, Milbeneiern oder Ausscheidungen, Pollen, Rauchpartikeln, Asbest, Bakterien, diversen toxischen Stäuben oder Aerosolen aus der Luft benutzt. Diese Filter sind üblicherweise in der Medizintechnik eingesetzt, und lassen sich erfindungsgemäß zur Herstellung der Sterilluft geeignet einsetzen, wobei Umgebungsluft mittels Ventilatoren oder Kompressionseinrichtungen durch die Filter gedrückt wird, und die darin enthaltenen Schwebstoffe und Verunreinigungen ausgefiltert werden können. Filter einer Filterklasse H13 oder höher erreichen einen Abscheidegrad von 99,95 % für den gesamten Luftstrom, wobei lokal zumindest 99,75 % Abscheidungsrate von Partikeln von 0,1 µm bis 0, 3 µm erreicht werden können. Laut dem VDMA-Einheitsblatt "Druckluftqualität (Liste empfohlener Einheitsklassen gemäß ISO 8573-1) VDMA 15390 vom März 2004 werden zur Herstellung von Sterilluft für eine Sterilluftüberlagerung Filter eingesetzt, die feste Verunreinigungen im Bereich von 1 µm bis 5 µm vollständig ausfiltern und Verunreinigungen <1 µm nur im Bereich von 1-100 ppm hindurchlassen können. Derartige Filter gewährleisten eine erforderliche Keimfreiheit der Sterilluftüberlagerung, so dass Rohmilch ohne zusätzliche Behandlungsstufen eine extrem hohe Langlebigkeit aufweist.

Vorteilhafterweise werden im nachfolgenden Rohmilch-Verarbeitungsprozess weiterhin eine Sterilluftatmosphäre eingesetzt, so dass eine Keimfreiheit gewährleistet bleibt. Dazu ist es weiterhin vorteilhaft, dass in der gesamten Melkanlage keine ungefilterte Luft mit der Rohmilch in Verbindung steht. Durch eine regelbare Sterilluft-Kompressoreinheit kann der Druck in der Sterilluft-Zentralleitung eingestellt werden, und insbesondere im Verhältnis zum Volumenstrom der Fluidabsaugmilchschlauch derart eingestellt werden, dass die Sterilluftüberlagerung im gesamten Arbeitsprozess gewährleistet bleibt. Insoweit ist die Sterilluftüberlagerung praktisch kontinuierlich ohne Unterbrechung im Gewinnungs- Transport- und Verarbeitungsprozess zu gewährleisten.

Vorteilhafterweise kann der Sterilluftvolumenstrom derart eingestellt werden, dass sich im Ringraum des Zitzenbechers ein atmosphärischer Überdruck der Sterilluft mit mindestens 5 kPa, insbesondere zumindest 10 kPa, zur Herstellung der Sterilluftüberlagerung einstellt. Durch einen Überdruck von mindestens 5 kPa, insbesondere 10 kPa oder höher, im Öffnungsbereich des Zitzenbechers wird effektiv verhindert, dass Keime aus der Stallluft eindringen können, um die Haltbarkeit der Rohmilch zu verkürzen.

Vorteilhafterweise umfasst die Melkanlage eine Milch-Zentralsammelleitung, an die der Milchschlauch jedes Melkgeschirrs angeschlossen ist. Die Zentralsammelleitung sammelt die gemolkene Rohmilch jedes Melkgeschirrs und führt diese zur Weiterverarbeitung in einen Sammelbehälter oder in eine Transportvorrichtung. Die Zentralsammelleitung kann vorteilhafterweise durch eine Durchlauf-Milchkühlvorrichtung geführt sein, wobei die Rohmilch auf <5°C abgekühlt wird. Hierdurch wird erreicht, dass sich selbst geringe Mengen an biologischen Verunreinigungen in der Rohmilch nicht weiter verbreiten können, somit kann die Haltbarkeit der Rohmilch weiterhin verlängert werden. Als Durchlauf-Milchkühlvorrichtung bietet sich ein Wärmetauscher an, der als Kältereservoir Eiswasser nutzt, oder ein üblicher Kompressions-Durchlaufkühler.

In einer vorteilhaften Weiterbildung der Melkanlage wird vorgeschlagen, dass ein Milchsammelbehälter umfasst ist, dessen Luftausgleichsöffnung mit einer Sterilluft-Filteranlage oder der Sterilluft-Druckleitung der Melkanlage verbunden ist. Ein Milchsammelbehälter muss zu Reinigungszwecken, aber auch zur Herstellung einer Tieftemperaturatmosphäre, einen Druckausgleich mit einer Umgebungsluft aufweisen, durch den beispielsweise beim Abkühlen des Milchsammelbehälters Luft nachströmt oder beim Erwärmen, insbesondere beim Heißreinigen des Milchsammelbehälters, Luft ausströmen kann. Diese Luftdruckausgleichsöffnung ist vorteilhafterweise mit einer Sterilluft-Filteranlage verbunden, so dass lediglich Sterilluft in den Milchsammelbehälter einströmen kann. Weitere Öffnungen zur Atmosphärenluft sind nicht gegeben, so dass gewährleistet ist, dass keine kontaminierte Luft mit der Rohmilch in Verbindung gebracht werden kann. Bevorzugt kann im Milchsammelbehälter eine Milchkühlvorrichtung umfasst sein, die die Rohmilch auf <5°C abkühlt, so dass eine schnellere Kühlkette und eine verlängerte Haltbarkeit erreicht werden kann. So kann durch direktes Verdampfen von Kühlmittel oder Eiswasser die Rohmilch abgekühlt werden, oder durch Einblasen von gekühlter Sterilluft kann die Rohmilch auf tiefen Temperaturen gekühlt werden.

Weitergehend hierzu und ebenfalls vorteilhaft umfasst die Melkanlage eine Milchtransportvorrichtung, insbesondere einen Milchtransportwagen, Lastwagen oder weitere Behälter und Transportkessel, deren Luftdruckausgleichsöffnungen ebenfalls mit einer Sterilluft-Filteranlage verbunden sind. Somit wird gewährleistet, dass von Gewinnung der Milch an der Zitze eines Nutztiers bis zur Endverarbeitung, beispielsweise als Joghurt, Rohmilchkäse, Quark, Kefir oder andere Milchprodukte, das Lebensmittelerzeugnis ausschließlich in einer Sterilluftatmosphäre in Kontakt tritt, so dass keine unerwünschten Verunreinigungen oder biologisches Wachstum von Keimen in der Rohmilchumgebung erfolgen kann. Damit wird eine extrem lange Haltbarkeit der Rohmilch ohne zusätzliche haltbarkeitsverlängernden Maßnahmen erreicht, so dass z.B. auf thermische Behandlung oder Ultrahocherhitzen, Bestrahlung durch Licht oder Zugabe von keimtötenden Mitteln verzichtet werden kann. Bevorzugt kann in einer Milchtransportvorrichtung eine Milchkühlvorrichtung umfasst sein, die die Rohmilch auf <5°C abkühlt, so dass eine schnellere Kühlkette und eine verlängerte Haltbarkeit erreicht werden kann. So kann durch direktes Verdampfen von Kühlmittel oder Eiswasser die Rohmilch abgekühlt werden, oder durch Einblasen von gekühlter Sterilluft kann die Rohmilch auf tiefen Temperaturen gekühlt werden.

In dem Milchsammelbehälter und in der Milchtransportvorrichtung sind jeweils Umgebungen zur Außenluft zur Be- und Entlüfung vorgesehen. Um eine Kontamination des Tankinneren zu vermeiden, ist die Luftmenge, die von der Sterilluft-Filteranlage in den Tank des Milchsammelbehälters bzw. der Milchtransportvorrichtung eingeblasen wird, größer als eine Luftmenge, die durch Be- oder Entlüftungsöffnungen eindringen können. Somit wird durch Einblasen von Sterilluft mit erhöhtem atmosphärischen Druck in den Sammel- bzw. Transporttank verhindert, dass kontaminierte Umgebungsluft von außen in den Tank eindringen kann.

In einem abschließenden Aspekt wird ein Verfahren zur Verwendung und Cleaning-in-Place Reinigung (CIP-Reinigung) eines Melkgeschirrs nach einem der vorhergehenden Ansprüche vorgeschlagen, dass die folgenden Schritte umfasst:
- bei Beendigung eines Melkvorgangs Abschalten des Fluidabsaug-Volumenstroms und des Pulsations-Volumenstroms, so dass ein Zitzenbecher von einer Zitze abfällt;
- Wiedereinschalten zumindest des Fluidabsaug-Volumenstroms (Vm);
- Einführung einer zu melkenden Zitze und Beginn eines weiteren Melkvorgangs oder Aussetzen des Melkvorgangs.

Das erfindungsgemäße Verfahren weist sich dadurch aus, dass kontinuierlich ein Sterilluftvolumenstrom (Vs) größer als ein Fluidabsaug-Volumenstrom (Vm) am Kopfbereich des Zitzenbechers zugeführt wird, so dass sich eine Sterilluftüberlagerung an der Zitzenaufnahmeöffnung einstellt, die verhindert, dass Umgebungsluft in den Zitzenbecher hineinströmt. Somit werden ein Verwendungsverfahren und ein Reinigungsverfahren vorgeschlagen, bei dem auch außerhalb des Melkvorgangs die Zitzenbecher des Melkgeschirrs von Sterilluft durchströmt werden, so dass keine Verunreinigung von außen in das Rohmilchsystem gelangen kann, und somit die Milch direkt aus dem Euter ohne Berührung mit Atmosphärenluft weiterverarbeitet werden kann. Hierdurch wird eine extrem lange Haltbarkeit ohne zusätzliche Haltbarkeitsbehandlungsmaßnahmen erreicht.

In einer vorteilhaften Weiterbildung wird als Zwischenschritt vorgeschlagen, dass nach der Beendigung des Melkvorgangs die Zitzenaufnahmeöffnung durch einen fluiddichten Verschlussstopfen zu Reinigungszwecken verschlossen wird. Durch den Verschluss der Zitzenaufnahmeöffnung wird zum einen mechanisch verhindert, dass verunreinigende Stoffe in den Zitzenbecher eindringen können, zum anderen wird der Zitzenbecher durch einen Druckaufbau an Sterilluft durch Sterilluft gespült, so dass mögliche Verunreinigungen abgesaugt werden können. Hierdurch wird eine verbesserte CIP-Reinigung erreicht, so dass auf den Einsatz von chemischen Reinigungsmitteln verzichtet werden kann. Hierdurch werden Reinigungskosten und Stillstandszeiten beim Melkverfahren verringert.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: perspektivische Darstellung eines Melkgeschirrs;
- **Fig. 2**: in einer Schnittdarstellung eine Ausführungsform eines Zitzenbechers in einem melkbereiten Zustand;
- **Fig. 3**: die Darstellung des Zitzenbechers nach Fig. 2 in einem Melkzustand;
- **Fig. 4**: weitere Ausführungsformen eines Zitzengummis und eines Zitzenbechers;
- **Fig. 5**: die Darstellung eines Verwendungsverfahrens und CIP-Reinigung gemäß der Erfindung;
- **Fig. 6**: die Darstellung einer Ausführungsform einer Melkanlage gemäß der Erfindung;
- **Fig. 7**: die Darstellung einer weiteren Ausführungsform einer Melkanlage nach der Erfindung;
- **Fig. 8**: perspektivische Darstellung einer Sterilluft-Filteranlage zum Einsatz in der Erfindung;
- **Fig. 9**: perspektivische Darstellung und Blockschaltdiagramm einer Sterilluft-Filteranlage für den Einsatz gemäß der Erfindung.

In den Figuren sind gleichartige Elemente mit gleichen Bezugszeichen beziffert. Die Figuren zeigen lediglich Beispiele und sind nicht beschränkend zu verstehen. Einzelne Merkmale der Erfindung können untereinander auch kombiniert werden, um weitere Ausführungsbeispiele darzustellen.

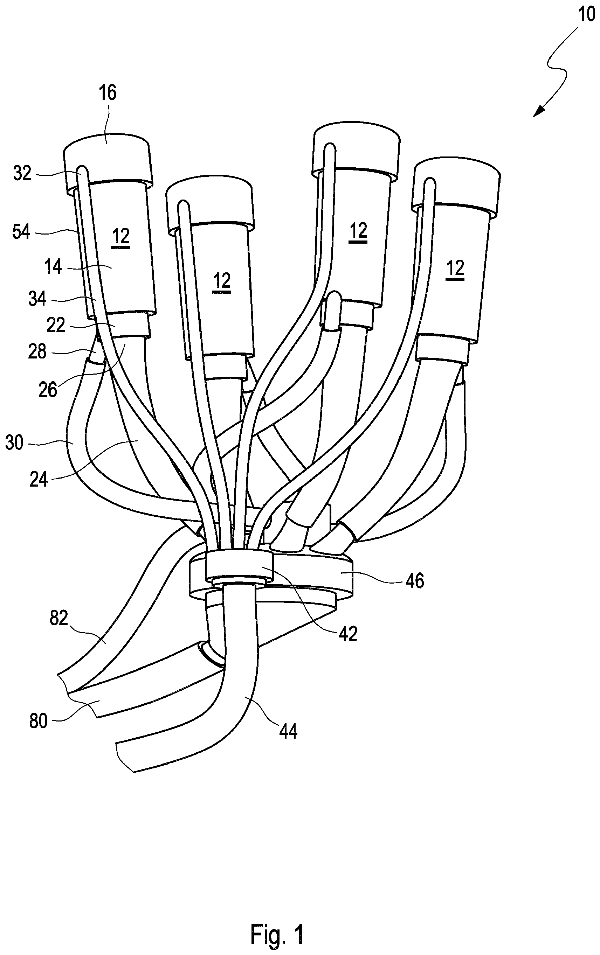

In der Fig. 1 ist perspektivisch eine erste Ausführungsform eines Melkgeschirrs 10 dargestellt. Das Melkgeschirr 10 umfasst vier Zitzenbecher 12 mit einem Bechergehäuse 14 aus Edelstahl sowie einem eingesetzten Zitzengummi 16. Am Becherboden 22 jedes Zitzenbechers 12 ist ein Milchschlauch 24 angeordnet, der zu einer Milchsammeleinrichtung 46 führt. In der Milchsammeleinrichtung 46 vereinigen sich die vier Milchschläuche 24 der vier Zitzenbecher 12, wobei gesammelte Milch über einen Milchschlauch-Zentralanschluss 80 zu einem nicht dargestellten Milchsammelbehälter abgeführt werden kann. Des Weiteren ist am Becherboden 22 ein Pulsator-Anschluss 28 angeordnet, an dem eine Pulsatorleitung 30 in das Bechergehäuse 14 mündet. Im Hohlraum zwischen Zitzengummi 16 und Bechergehäuse 14 kann ein pulsierendes Vakuum erzeugt werden, wodurch eine eingeführte Zitze eines zu melkenden Tieres zur Milchabgabe angeregt werden kann. Die Pulsatorleitung 30 ist ebenfalls zur Milchsammeleinrichtung 46 geführt, wobei ein Pulsatorzentralanschluss 82 zu einer zentralen Pulsatorleitung angeordnet ist, um ein Pulsationsunterdruck an die Zitzenbecher zu führen. Jeder Zitzenbecher 12 weist eine Sterilluft-Druckleitung 34 auf, die in einem Mündungsabschnitt 32 des Zitzengummis 16 in den Kopfbereich des Zitzenbechers 12 geführt ist. Die Sterilluft-Druckleitung 34 jedes Zitzenbechers 12 ist zu einer Sterilluft-Verteilereinheit 42 geführt, die an der Milchsammeleinrichtung 46 angeordnet ist. An der Sterilluft-Verteilereinheit 42 mündet ein Sterilluft-Zentraldruckleitungsanschluss 44, der zu einer zentralen Sterilluft-Druckleitung führt, über die Sterilluft in den Kopfbereich jedes Zitzenbechers 12 geführt werden kann. Der Fluidstrom an Sterilluft durch jede Sterilluft-Druckleitung 34 übersteigt den Fluidstrom am Milchschlauch 24, so dass sich sowohl im Melkzustand als auch in den Zeiträumen dazwischen Sterilluftüberdruck im Zitzenbecherinneren herrscht, so dass eine Sterilluftüberlagerung gegeben ist, die verhindert, dass Verunreinigungen durch eine Atmosphärenluft in das Innere des Zitzenbechers 12 eindringen kann. Hierdurch kann gemolkene Milch vom Euter eines Nutztiers entnommen und weiterverarbeitet werden, ohne mit Atmosphärenluft in Berührung zu kommen.

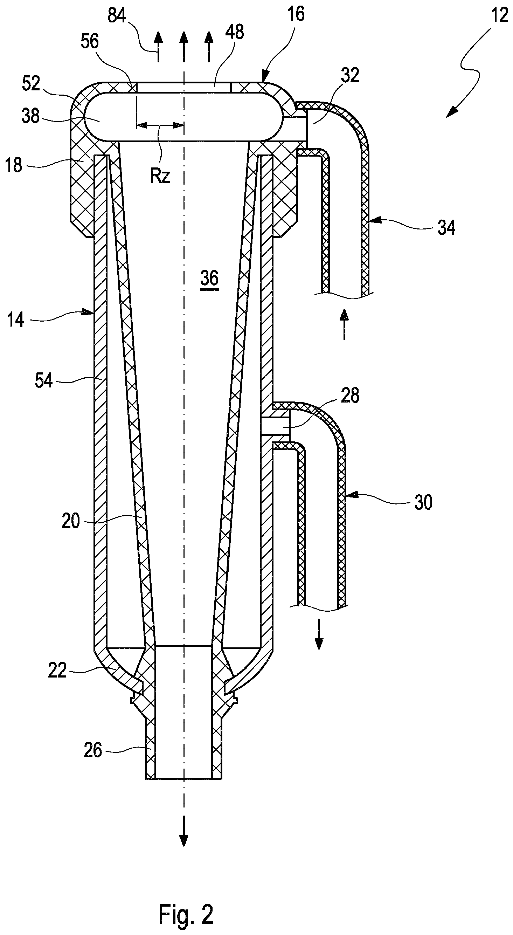

In der Fig. 2 ist ein Schnittbild eines Zitzenbechers 12 gemäß einer Ausführungsform dargestellt. Der Zitzenbecher 12 umfasst ein Bechergehäuse 14 aus Edelstahl mit einem Becherboden 22. In das Bechergehäuse 14 ist ein Zitzengummi 16 eingeführt, der am oberen offenen Rand des Bechergehäuses 14 umschließt und einen Kopfbereich 18 ausbildet. Ein Saugbereich 20 des Zitzengummis ist konisch in Richtung Milchschlauchanschluss 26 verjüngt, so dass ein in den Zitzenaufnahmebereich 36 eindringender Euter den Kopfbereich 18 vom Saugbereich 20 hermetisch abschließt. Im Kopfbereich 18 befindet sich ein Mündungsabschnitt 32 einer Sterilluft-Druckleitung 34, durch die Sterilluft in einen Ringraum 38 eingeführt wird. Die obere Zitzenaufnahmeöffnung 48 weist einen Radius auf, der größer ist als der durchschnittliche Radius einer Zitze, die in den Zitzenaufnahmebereich 36 eingeführt werden kann. Der Volumenstrom der Sterilluft durch die Sterilluft-Druckleitung 34 ist höher als der Fluidstrom, der durch den Milchschlauchanschluss 26 abgeführt wird, so dass sich eine Sterilluftüberlagerung 84 ergibt, wodurch verhindert wird, dass Luft von außen in den Ringraum 38 einströmt.

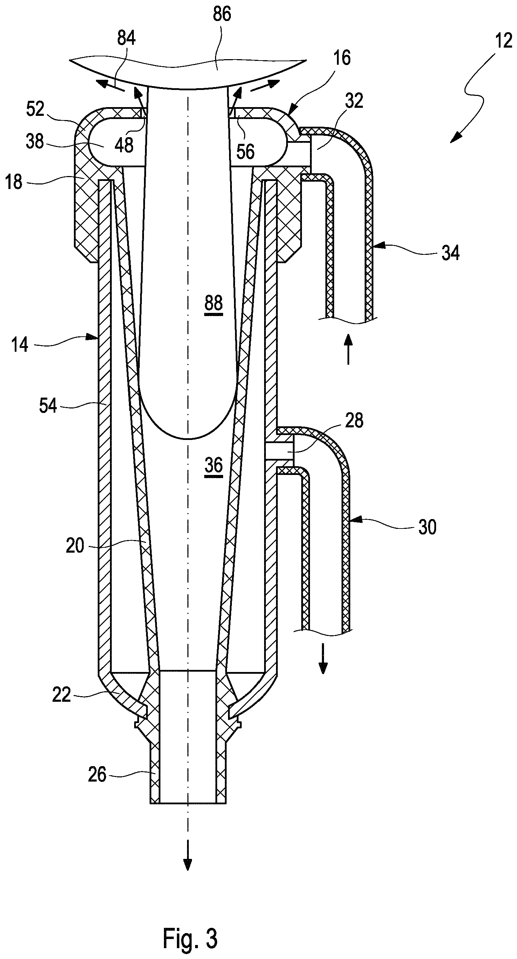

Die Fig. 3 zeigt das in Fig. 2 dargestellte Ausführungsbeispiel eines Zitzenbechers 12 mit einer eingeführten Zitze 88 eines Euters 86. Durch die konische Verjüngung des Saugbereichs 20 trennt die Zitze 88 den Kopfbereich 18 mit Ringraum 38 vom Saugbereich 20, in den Milch durch den Milchschlauchanschluss 26 abgeführt wird. Durch die Erzeugung eines Unterdrucks mittels der Pulsatorleitung 30 im Hohlraum zwischen Bechergehäuse 14 und Saugbereich 20 des Zitzengummis 16 wird die Zitze 88 stimuliert, dass sie Milch abgibt. Die gemolkene Milch wird durch den Milchschlauchanschluss 26 mittels eines Fluidstroms wegbefördert. Ein entstehender Sterilluftüberdruck im Ringraum 38 wird über die Öffnung zwischen Zitze 88 und Zitzenaufnahmeöffnung 56 abgeführt und dient zum einen zur Kühlung des Euters 86, zum anderen verhindert sie das Eindringen von Stallluft.

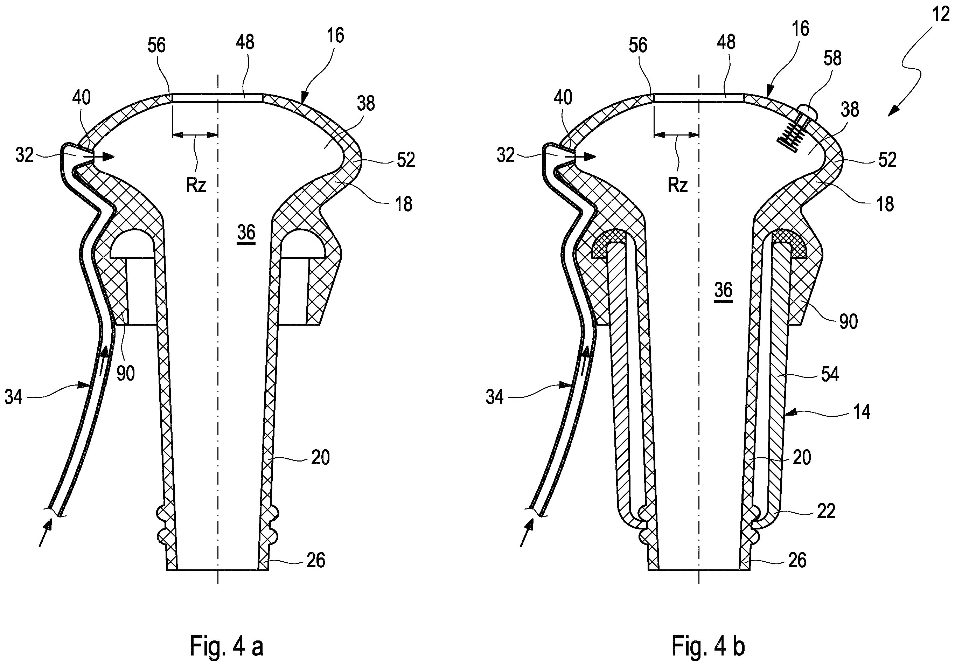

In der Fig. 4a ist in einer Schnittdarstellung ein Zitzengummi 16 eines Ausführungsbeispiels dargestellt. Der Zitzengummi 16 gliedert sich in einen Saugbereich 20, in der der Zitzenaufnahmebereich 36 definiert ist und einen Kopfbereich 18, in der ein Ringraum 38 vorgesehen ist. In einem Wandbereich 52 des Ringraums 38 befindet sich ein Mündungsabschnitt 32 einer Sterilluft-Druckleitung 34, durch die Sterilluft in den Ringraum 38 eingeblasen wird. Hierzu ist eine Druckluft-Düse 40 am Mündungsabschnitt 32 vorgesehen, die den Sterilluftstrom gezielt Richtung Zitzenaufnahmeöffnung 48 lenkt, um das Eindringen von Stallluft zu verhindern. Der die Zitzenaufnahmeöffnung 48 begrenzende Wandungsabschnitt 56 ist aus einem Material geformt, das elastisch ist, so dass eine Zitze leicht eingeführt werden kann, und ein entstehender Überdruck von Sterilluft im verbleibenden Raum zwischen Zitze und Wandungsabschnitt 56 austreten kann. Der Zitzengummi 18 weist einen Stülpbereich 90 auf, der einen oberen Rand eines Bechergehäuses 14 überstülpen kann.

In der Fig. 4b ist ein eingesetzter Zitzengummi 16 nach der Fig. 4a dargestellt.

Abweichend zur Fig. 4a ist ein Überdruckventil 58 im Wandbereich 52 des Ringraums 38 angeordnet, der einen entstehenden Überdruck an Sterilluft abführen kann, um beim Melkvorgang einen zu hohen Druck und damit ein ungewolltes Ablösen des Zitzenbechers 12 zu verhindern. Die Sterilluft-Druckleitung 34 kann an einem Außenwandabschnitt 54 des Bechergehäuses 14 angebracht, beispielsweise geklebt, mit Klemmmitteln geklammert oder mit Befestigungsmitteln wie Überlegern angeordnet sein, um ein einfaches Handling des Melkgeschirrs zu ermöglichen.

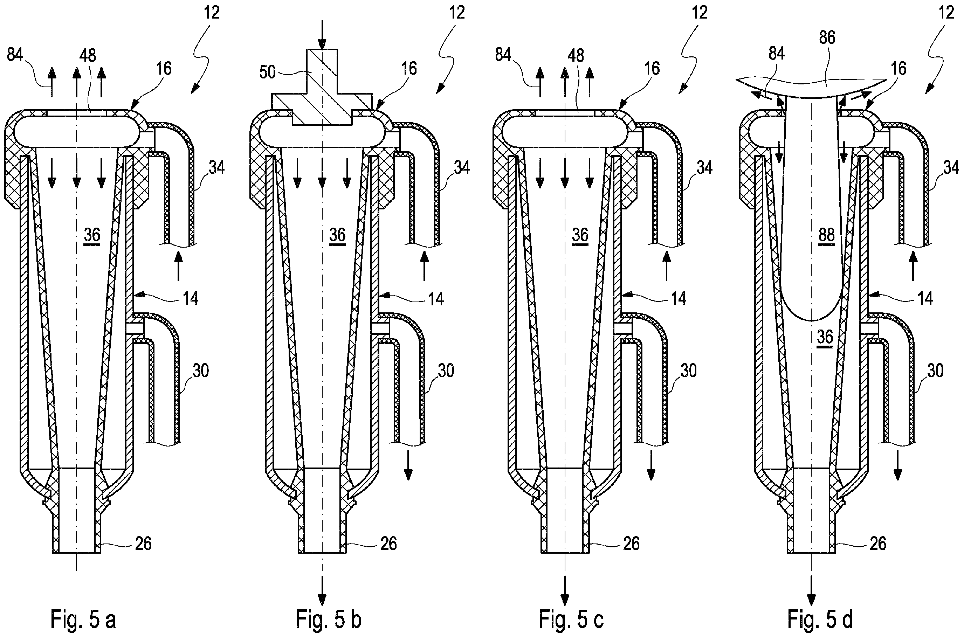

In den Figs. 5a bis 5d ist ein Verfahrensablauf für ein Melken und eine Cleaning-in-Place Reinigung eines Zitzenbechers 12 dargestellt. Der Zitzenbecher 12 entspricht im Aufbau den in den Fig. 2 und 3 gezeigten Ausführungsbeispielen. Im ersten Schritt wird weder ein Absaugfluidstrom am Milchschlauchanschluss 26 angelegt, noch ein Vakuum an der Pulsatorleitung 30. Lediglich eine Sterilluftzuführung ist in der Sterilluft-Druckleitung 34 eingestellt, die kontinuierlich in allen Schritten des Melkverfahrens und Reinigungsverfahrens anliegt. In diesem Zustand tritt Sterilluft über die Zitzenaufnahmeöffnung 56 nach außen und bildet eine Sterilluftüberlagerung 84, und es strömt des Weiteren Sterilluft in Richtung des Milchschlauchanschlusses 26. Zum Durchspülen des Zitzenbechers 12 mit Sterilluft kann ein Verschlussstopfen 50 auf die Zitzenaufnahmeöffnung 56 gebracht werden, so dass Sterilluft lediglich durch den Zitzengummi 16 und den Zitzenaufnahmebereich 36 fließt und über den Milchschlauchanschluss 26 Sterilluft in das System eingeblasen wird. Wird eine Milchpumpe aktiviert, so strömt ein Fluidstrom über den Milchschlauchanschluss 26, wobei gleichzeitig auch ein pulsierendes Vakuum an der Pulsatorleitung 30 angelegt werden kann, um einen Melkvorgang auszulösen, während weiterhin Sterilluft über die Sterilluft-Druckleitung 34 eingeführt wird. Hiernach wird eine Zitze 88 eines Euters 86 in den Zitzenaufnahmebereich 36 eingebracht, und ein Melkvorgang kann beginnen. Zum Entfernen des Zitzenbechers 12 wird der Fluidstrom am Milchschlauchanschluss 26 unterbrochen, durch den erzeugten Überdruck der Sterilluftzuführung löst sich der Zitzenbecher 12 automatisch von der Zitze 88. Der entstehende Überdruck an Sterilluft strömt über einen verbleibenden Spalt an der Zitze vorbei Richtung Euter 86 und kühlt das Euter und verhindert ein Eindringen von Schadstoffen aus der Stallluft.

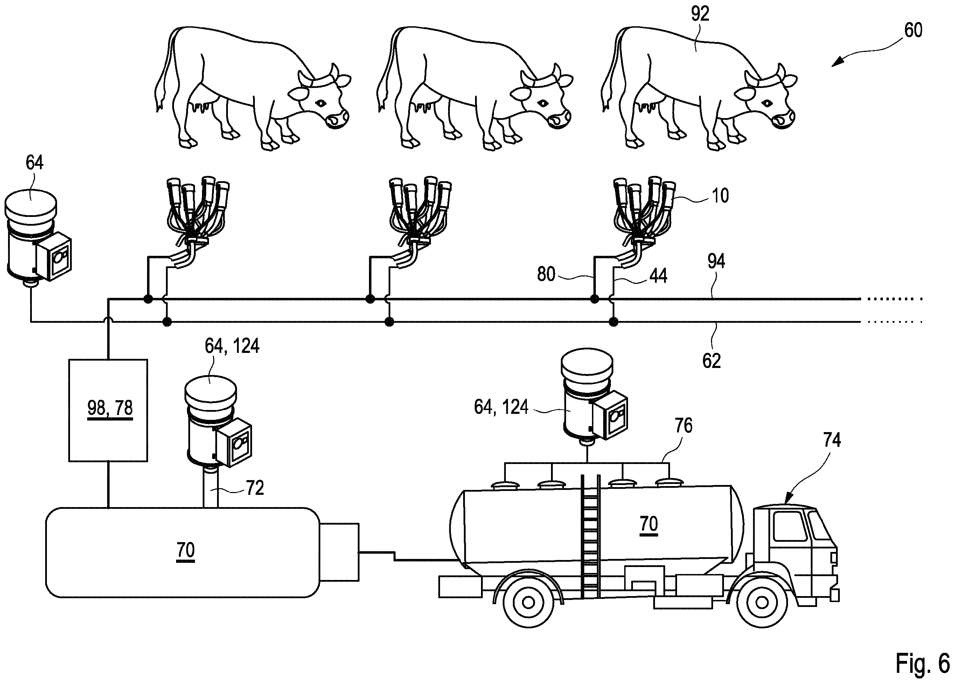

In der Fig. 6 ist schematisch eine Ausführungsform einer Melkanlage 60 dargestellt, die zum parallelen Melken von Kühen 92 dient. Die Melkanlage 60 umfasst eine Milch-Zentralsammelleitung 94 und eine Sterilluft-Zentraldruckleitung 62. An der Sterilluft-Zentraldruckleitung 62 sind Sterilluft-Zentraldruckleitungsanschlüsse 44 von Melkgeschirren 10 angeschlossen. Gemolkene Milch durch die Melkgeschirre 10 wird über einen Milchschlauch-Zentralanschluss 80 an die Milch-Zentralsammelleitung 94 transportiert. Die Milch in der Milch-Zentralsammelleitung 94 wird über eine Milchpumpeinrichtung 98 zu einem Milchsammelbehälter 70 geführt, der in der Regel tiefgekühlt bei ca. 2 °C bis 5 °C die Milch sammelt. Hierzu kann die Milch-Zentralsammelleitung 94 durch einen Durchlauf-Milchkühlvorrichtung 78, die nach einem Wärmetauscherprinzip arbeiten kann, geführt werden, um die Rohmilch bereits in der Milch-Zentralsammelleitung 94 auf eine Temperatur unter 5°C abzukühlen. Die Sterilluft-Zentraldruckleitung 62 wird über eine Sterilluft-Filteranlage 64 mit Sterilluft versorgt, wobei der Volumenstrom der Sterilluft höher ist als der Fluidstrom, der von der Milchpumpeneinrichtung 98 über die Milch-Zentralsammelleitung 94 abgeführt wird. Hierdurch entsteht in jedem Zitzenbecher 12 jedes Melkgeschirrs 10 eine Sterilluftüberlagerung, so dass keine Stallluft vor Beginn des Melkens und während des Melkvorgangs eindringen kann. Der Milchsammelbehälter 70 weist eine Luftdruckausgleichsöffnung 72 auf, an die eine separate Sterilluft-Filteranlage 64 angeschlossen ist, um bei einem Luftdruckausgleich, beispielsweise beim Befüllen des Milchsammelbehälters 70, beim Tiefkühlen des Milchsammelbehälters 70 oder während eines Reinigungsvorgangs einen Druckausgleich mittels Sterilluftaustausch bereitstellen zu können. Die Sterilluft-Filteranlage 64, die an den Milchsammelbehälter 70 und an den Milchtransportvorrichtung 74 angeschlossen sind, sind mit einer Milchkühlvorrichtung 124 kombiniert, um Sterilluft mit einer Temperatur <5C° einzublasen. Alternativ kann die Milchkühlvorrichtung 124 unmittelbar direkt Kühlmittel verdampfen oder mittels eines Wärmetauschers die Rohmilch kühlen. An dem Milchsammelbehälter 70 ist über eine Verbindungsleitung eine Milchtransportvorrichtung 74 in Form eines Milchtank-Lkws angeschlossen. Mit der Milchtransportvorrichtung 74 kann die Rohmilch aus dem Milchsammelbehälter 70 zur Weiterverarbeitung in einer Molkerei verbracht werden. Die Milchtransportvorrichtung 74 umfasst im Wesentlichen ebenfalls einen Milchsammelbehälter 70, der über ein oder mehrere Luftdruckausgleichsöffnungen 76 verfügt. Die Luftdruckausgleichsöffnungen 76 sind ebenfalls über eine Sterilluft-Filteranlage 64 der Milchtransportvorrichtung 74 zum Druckausgleich mit der Außenwelt verbunden, so dass beispielsweise nach Abschluss eines Heißreinigungsprozesses oder beim Abkühlen Luft nur gefiltert aus der Atmosphäre als Sterilluft in den Milchbehälter geführt werden kann. Mit einer in der Fig. 6 dargestellten Melkanlage ist es möglich, Rohmilch ohne Kontamination mit Stallluft oder mit Umgebungsluft zu melken und zu transportieren, so dass Rohmilch eine extrem hohe Haltbarkeit aufweist und ohne weitere Verarbeitungsschritte eine lange Lagerzeit und eine hohe Qualität des Endproduktes erreichen kann.

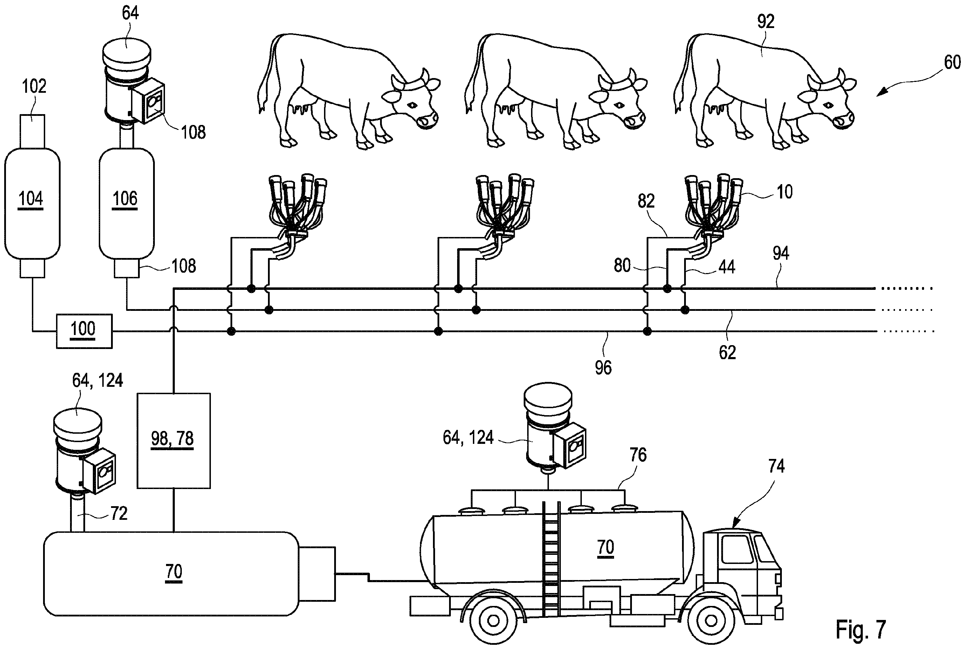

In der Fig. 7 ist eine alternative Ausführungsform einer Melkanlage 60 dargestellt. Hierbei wird auf die Beschreibung der bereits in der Fig. 6 dargestellten Elemente verzichtet, und lediglich Unterschiede diskutiert. Im Gegensatz zu der in der Fig. 6 dargestellten Melkanlage umfasst die in Fig. 7 dargestellte Melkanlage eine weitere Pulsationszentralleitung 96. Gemolkene Rohmilch wird von dem Milchgeschirr 10 über einen Milchschlauch-Zentralanschluss 80 zur Milch-Zentralsammelleitung 94 abtransportiert. Sterilluft zur Herstellung einer Sterilluftüberlagerung wird von einer Sterilluft-Zentraldruckleitung 62 über einen Sterilluft-Zentraldruckleitungsanschluss 44 an das Melkgeschirr 10 geführt. Ein für den Melkvorgang unerlässliches pulsierendes Vakuum bzw. Niederdruck wird über die Pulsationszentralleitung 96 und einen Pulsatorleitung-Zentralanschluss 82 an den Zitzenbecher jedes Melkgeschirrs 10 geführt. Zur Herstellung des Pulsationsvakuums dient eine Vakuumpumpe 102, der ein Vakuumtank 104 nachgeordnet ist. Über eine Pulsationssteuerung 100 wird entsprechend einer Melkstimulation ein Pulsationsvakuum hergestellt, über das jeder Zitzenbecher des Melkgeschirrs eine Melkbewegung am Euter eines zu melkenden Tieres bereitstellen kann. Zur Herstellung der Sterilluftüberlagerung ist eine Sterilluft-Filteranlage 64 einem Sterilluft-Kompressionstank 106 vorgeschaltet. In dem Sterilluft-Kompressionstank 106 wird Sterilluft in komprimierter Form bereitgestellt, so dass eine hohe Anzahl von Melkgeschirren an die Sterilluft-Zentraldruckleitung 62 angeschlossen werden können. Eine Sterilluft-Drucksteuerung 108 stellt einen genügend hohen Volumenstrom und Druck in der Sterilluft-Zentraldruckleitung 62 zur Verfügung, so dass eine Sterilluftüberlagerung an jedem Melkgeschirr erreicht werden kann. Milch aus der Milch-Zentralsammelleitung 94 wird über eine Milchpumpeneinrichtung 98 an einen Milchsammelbehälter 70 weitergeleitet. Ein Luftdruckausgleich im Milchsammelbehälter 70 kann über eine Luftdruckausgleichsöffnung 72 und eine weitere Sterilluft-Filteranlage 64 bewerkstelligt werden. Schließlich kann die Rohmilch über eine Milchtransportvorrichtung 74, die jeweils auch über eine Sterilluftatmosphäre im Milchtank verfügt, an eine Molkerei abgeführt werden. Durch den gesamten Verarbeitungsprozess in der vorgeschlagenen Melkanlage können an keiner Stelle kontaminierte Luft, Krankheitserreger, Mikroben oder Staubpartikel in die Rohmilch eindringen, so dass eine extrem hohe Qualität und lange Lebensdauer unbehandelter Rohmilch erreicht werden kann. Die an den Milchsammelbehälter 70 und an den Milchtransportvorrichtung 74 angeschlossenen Sterilluft-Filteranlagen 64 können mit einer Milchkühlvorrichtung 124 kombiniert sein, um gekühlte Sterilluft in die Lagertanks einzublasen. Alternativ kann die Rohmilch mittels Wärmetauscher oder andersartig auf eine Temperatur <5°C gekühlt werden, um die Haltbarkeit der Rohmilch weiterhin zu erhöhen.

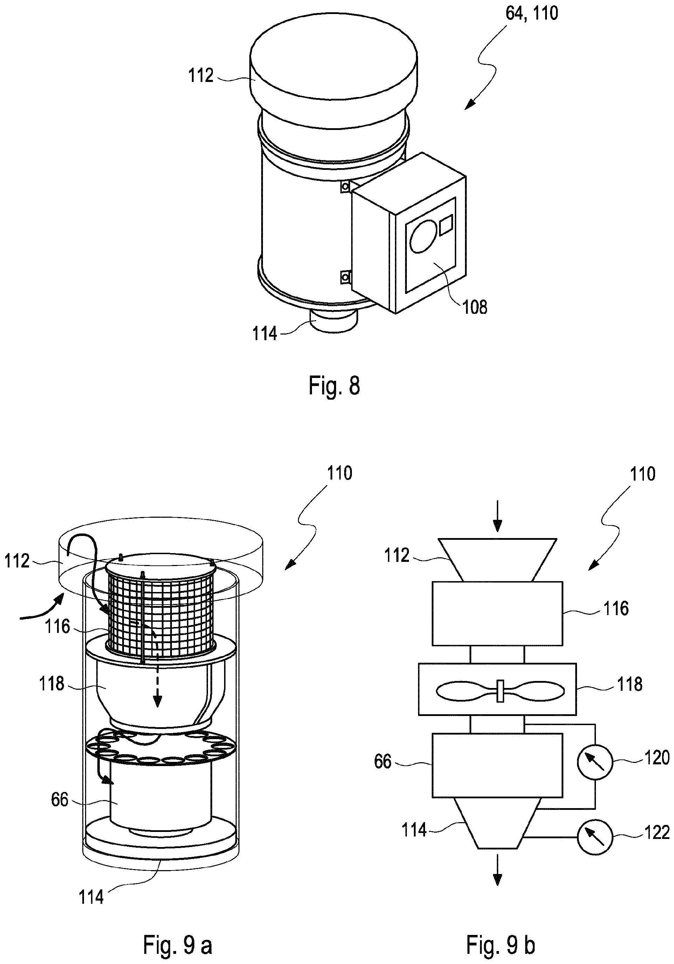

In der Fig. 8 ist perspektivisch eine Ausführungsform einer Sterilluft-Filteranlage 64 dargestellt, die als Sterilluft-Kompressionsfilteranlage 110 ausgeführt ist. Die Sterilluft-Kompressionsfilteranlage 110 weist einen Umgebungsluft-Einlassbereich 112 mit einem Labyrinthkanal auf, der vor Umwelteinflüssen und Regen geschützt nur von unten mit Luft beströmbar ist, und einen auf der entgegengesetzten Seite angeordneten Sterilluft-Auslassbereich 114, in dem gefilterte Sterilluft ausgegeben wird. Die Filteranlage 110 ist zylinderförmig aufgebaut und weist an einem Außenwandabschnitt eine elektrische Sterilluft-Drucksteuerung 108 auf, in der Bedienelemente sowie Anzeigeelemente zum Anzeigen des Betriebszustandes sowie beispielsweise eines anstehenden Filterwechsels, des aktuellen Drucks etc. angeordnet sind.

In der Fig. 9a ist perspektivisch der Innenaufbau der in Fig. 8 dargestellten Sterilluft-Kompressionsfilteranlage 110 dargestellt, und Fig. 9b stellt schematisch als Blockschaltdiagramm die Luftführung und die elektrischen Komponenten der Sterilluft-Kompressionsfilteranlage 110 dar. Umgebungsluft wird über einen Labyrinthkanal in einen Umgebungsluft-Einlassbereich 112 geführt und über eine Vorfiltereinheit 116 vorgefiltert. Die Vorfiltereinheit kann Luft mit etwa 0,35 m/s Fließgeschwindigkeit filtern und filtert Grobstoffe aus der Luft. Anschließend ist ein Filtergebläse 118 angeordnet, das einen Luftdruck erzeugt, und zur Herstellung eines gewünschten Fluidstromes von Sterilluft dient. Das Filtergebläse 118 ist drehzahlregelbar und kann eine Nennleistung zwischen 100 W bis 500 W, bevorzugt 200 W, aufweisen und einen Luftdurchsatz von bis zu 500 m³/h bereitstellen. Am Ausgang des Filtergebläses 118 ist ein Differenz-Manometer 120 angeordnet, das eine Druckdifferenz der Feinfiltereinheit 66 erfassen kann. Die Sterilfiltereinheit 66 ist ein Class 100-Filter, der nicht mehr als 100 Partikel von 0,5 µm Größe pro m³ Luft passieren lässt, und der eine Ausscheidungsquote an Feststoffen von 99,997 % umfasst. Er ist bevorzugt als HEPA-Filter oder als ULPA-Filter der Klasse H14 oder höher ausgeformt. Er weist eine aktive Filterfläche von mindestens 5 m² auf, wobei das Differenz-Manometer 120 den Druckverlust über den Filter 66 misst, und somit ein Verschmutzungsgrad indiziert bzw. ein Defekt oder eine ordnungsgemäße Funktion der Filteranlage anzeigt. Schließlich ist am Sterilluft-Auslassbereich 114 ein weiteres Druckmanometer 122 angeordnet, das den Sterilluftdruck innerhalb der Sterilluft-Zentraldruckleitung 62 bestimmen kann, um eine Überwachung einer genügenden Sterilluftüberlagerung vornehmen zu können.

Es ist denkbar, dass in der Sterilluft-Kompressionsfilteranlagel 10 eine Milchkühlvorrichtung 124 im Sinne eines Wärmetauschers oder nach dem Prinzip einer Kompressionsklimaanlage vorgesehen ist, um Sterilluft mit einer Temperatur <5°C zu erzeugen. Durch Einblasen gekühlter Sterilluft kann bereits im Melkgeschirr 10, aber auch in einem Milchsammelbehälter 70 und/oder Milchtransportvorrichtung 74 gewährleistet werden, dass die Rohmilch gekühlt und somit mit verlängerter Haltbarkeit weiterverarbeitet werden kann.

Durch die erfindungsgemäße Sterilluftüberlagerung der Rohmilch kann eine bis zu 10 % höhere Ausbeute bei Joghurt und Cottage-Käse bei erheblicher Qualitätsverbesserung und Haltbarkeitsverlängerung erreicht werden. Bei einer Nassreinigung von Sammelbehältern wird in der Regel mit Laugen oder Säuren bei über 70 °C das Behälterinnere gereinigt und hiernach mit kaltem Wasser abgespült, dabei entsteht ein erheblicher Luftaustausch durch die Temperaturschwankungen, wobei durch Zuführung von Sterilluft ein Eindringen von Erregern und Schadstoffen in den Bereich, der mit der Rohmilch in Verbindung gebracht wird, verhindert werden kann. Somit werden Reinheit und Konsistenz der Rohmilch erhalten und es müssen nicht künstliche Stoffe eingebracht oder Behandlungsschritte zur Verlängerung der Haltbarkeit vorgenommen werden. Die Sterilluft-Filteranlage sollte bei der erfindungsgemäßen Anwendung einen Luftdurchsatz von mindestens 500 m²/h an Sterilluft erzeugen können.

Die Erfindung kann darüber hinaus bei der Weiterverarbeitung aus der gewonnenen Rohmilch zu Fertigprodukten, wie beispielsweise Cottage-Käse, Frischkäse, Frischquark, Grießquark, Grießkäse etc., weiterhin eingesetzt werden, indem bei jeder Bearbeitungsstufe, in dem ein Austausch mit der Atmosphärenluft notwendig ist, Sterilluft statt Atmosphärenluft bei Überdruck eingesetzt wird, so dass verhindert wird, dass eine Leckströmung entsteht und kontaminierte Luft von außen in den Bearbeitungsprozess eindringt.

### Bezugszeichenliste

- 10: Melkgeschirr
- 12: Zitzenbecher
- 14: Bechergehäuse
- 16: Zitzengummi
- 18: Kopfbereich
- 20: Saugbereich
- 22: Becherboden
- 24: Milchschlauch
- 26: Milchschlauchanschluss
- 28: Pulsator-Anschluss
- 30: Pulsatorleitung
- 32: Mündungsabschnitt der Sterilluft-Druckleitung
- 34: Sterilluft-Druckleitung
- 36: Zitzenaufnahmebereich
- 38: Ringraum
- 40: Druckluft-Düse
- 42: Sterilluft-Verteilereinheit
- 44: Sterilluft-Zentraldruckleitungsanschluss
- 46: Milchsammeleinrichtung
- 48: Zitzenaufnahmeöffnung
- 50: Verschlussstopfen
- 52: Ringraum-Wandbereich
- 54: Bechergehäuse-Außenwandabschnitt
- 56: Zitzenaufnahmeöffnung umgebender Wandabschnitt
- 58: Überdruckventil
- 60: Melkanlage
- 62: Sterilluft-Zentraldruckleitung
- 64: Sterilluft-Filteranlage
- 66: Filtereinheit
- 68: Sterilluftkompressoreinheit
- 70: Milchsammelbehälter
- 72: Luftdruckausgleichsöffnung
- 74: Milchtransportvorrichtung
- 76: Luftdruckausgleichsöffnung
- 78: Durchlauf-Milchkühlvorrichtung
- 80: Milchschlauch-Zentralanschluss
- 82: Pulsatorleitung-Zentralanschluss
- 84: Sterilluft-Überlagerung
- 86: Euter
- 88: Zitze
- 90: Stülpbereich des Zitzengummis
- 92: Kuh
- 94: Milch-Zentralsammelleitung
- 96: Pulsationszentralleitung
- 98: Milchpumpeneinrichtung
- 100: Pulsationssteuerung
- 102: Vakuumpumpe
- 104: Vakuumtank
- 106: Sterilluft-Kompressionstank
- 108: Sterilluft-Drucksteuerung
- 110: Sterilluft-Kompressionsfilteranlage
- 112: Umgebungsluft-Einlassbereich
- 114: Sterilluft-Auslassbereich
- 116: Vorfiltereinheit
- 118: Filtergebläse
- 120: Differenz-Manometer
- 122: Druckmanometer
- 124: Milchkühlvorrichtung

### Bezugszeichenliste

- 10: Melkgeschirr
- 12: Zitzenbecher
- 14: Bechergehäuse
- 16: Zitzengummi
- 18: Kopfbereich
- 20: Saugbereich
- 22: Becherboden
- 24: Milchschlauch
- 26: Milchschlauchanschluss
- 28: Pulsator-Anschluss
- 30: Pulsatorleitung
- 32: Mündungsabschnitt der Sterilluft-Druckleitung
- 34: Sterilluft-Druckleitung
- 36: Zitzenaufnahmebereich
- 38: Ringraum
- 40: Druckluft-Düse
- 42: Sterilluft-Verteilereinheit
- 44: Sterilluft-Zentraldruckleitungsanschluss
- 46: Milchsammeleinrichtung
- 48: Zitzenaufnahmeöffnung
- 50: Verschlussstopfen
- 52: Ringraum-Wandbereich
- 54: Bechergehäuse-Außenwandabschnitt
- 56: Zitzenaufnahmeöffnung umgebender Wandabschnitt
- 58: Überdruckventil
- 60: Melkanlage
- 62: Sterilluft-Zentraldruckleitung
- 64: Sterilluft-Filteranlage
- 66: Filtereinheit
- 68: Sterilluftkompressoreinheit
- 70: Milchsammelbehälter
- 72: Luftdruckausgleichsöffnung
- 74: Milchtransportvorrichtung
- 76: Luftdruckausgleichsöffnung
- 78: Durchlauf-Milchkühlvorrichtung
- 80: Milchschlauch-Zentralanschluss
- 82: Pulsatorleitung-Zentralanschluss
- 84: Sterilluft-Überlagerung
- 86: Euter
- 88: Zitze
- 90: Stülpbereich des Zitzengummis
- 92: Kuh
- 94: Milch-Zentralsammelleitung
- 96: Pulsationszentralleitung
- 98: Milchpumpeneinrichtung
- 100: Pulsationssteuerung
- 102: Vakuumpumpe
- 104: Vakuumtank
- 106: Sterilluft-Kompressionstank
- 108: Sterilluft-Drucksteuerung
- 110: Sterilluft-Kompressionsfilteranlage
- 112: Umgebungsluft-Einlassbereich
- 114: Sterilluft-Auslassbereich
- 116: Vorfiltereinheit
- 118: Filtergebläse
- 120: Differenz-Manometer
- 122: Druckmanometer
- 124: Milchkühlvorrichtung

## Patentansprüche

1. Melkanlage (60) umfassend zumindest ein Melkgeschirr (10) mit zumindest einem, insbesondere vier Zitzenbecher (12), wobei jeder Zitzenbecher (12) ein Bechergehäuse (14) und einen im Bechergehäuse (14) aufgenommenen Zitzengummi (16) mit einem Kopfbereich (18) und einem Saugbereich (20) aufweist, wobei am Becherboden (22) oder am Ende des Saugbereichs (20) des Zitzengummis (16) ein Anschluss (26) für einen Milchschlauch (24) angeordnet ist, und bevorzugt an einem Wand- oder Bodenabschnitt des Bechergehäuses (14) ein Anschluss (28) für eine Pulsatorleitung (30) angeordnet ist, und im Kopfbereich (18) des Zitzengummis (16) ein Mündungsabschnitt (32) einer Sterilluft-Druckleitung (34) angeordnet ist, durch die Sterilluft mit einem Volumenstrom (Vs) größer als ein Fluidabsaug-Volumenstrom (Vm) am Milchschlauch (24) einleitbar ist, so dass im Kopfbereich (18) des Zitzengummis (16) eine Sterilluft-Überlagerung (84) einstellbar ist, wobei zumindest eine Sterilluft-Zentraldruckleitung (62) mit zumindest einer Sterilluft-Filteranlage (64) umfasst ist, durch die jede Sterilluft-Druckleitung (34) des Melkgeschirrs (10) zentral mit Sterilluft versorgt wird, so dass ein Sterilluft-Volumenstrom (Vs) in jeder Sterilluft-Druckleitung (34) einstellbar ist, der höher als ein Fluidabsaug-Volumenstrom (Vm) in jedem Milchschlauch (24) ist, wodurch eine Sterilluft-Überlagerung (84) in jedem Zitzenbecher (12) einstellbar ist.

2. Melkanlage (60) nach Anspruch 1, **dadurch gekennzeichnet, dass** die Sterilluft-Filteranlage (64) eine EPA-/HEPA- oder ULPA-Filtereinheit (66) mit einer Filterklasse H13 oder höher umfasst und dass die Sterilluft-Filteranlage (64) bevorzugt eine regelbare Sterilluftkompressoreinheit (68) umfasst.

3. Melkanlage (60) nach Anspruch 1 oder 2, **dadurch gekennzeichnet, dass** der Sterilluft-Volumenstrom (Vs) derart eingestellt ist, dass sich im Ringraum (38) des Zitzenbechers (12) des Melkgeschirrs (10) ein atmosphärischer Überdruck der Sterilluft von zumindest 5 kPa, insbesondere von zumindest 10 kPa zur Herstellung der Sterilluft-Überlagerung (84) einstellt.

4. Melkanlage (60) nach einem der vorhergehenden Ansprüche, **dadurch gekennzeichnet, dass** eine Milch-Zentralsammelleitung (94) umfasst ist, an die der Milchschlauch (24) jedes Melkgeschirrs (10) angeschlossen ist, und die durch eine Durchlauf-Milchkühlvorrichtung (78) geführt ist, die die Rohmilch auf <5°C abkühlt.

5. Melkanlage (60) nach einem der vorhergehenden Ansprüche, **dadurch gekennzeichnet, dass** ein Milchsammelbehälter (70) umfasst ist, dessen Luftdruckausgleichsöffnung (72) mit einer Sterilluft-Filteranlage (64) verbunden ist, wobei bevorzugt im Milchsammelbehälter (70) eine Milchkühlvorrichtung (124) umfasst ist, die die Rohmilch auf <5°C abkühlt.

6. Melkanlage (60) nach einem der vorhergehenden Ansprüche, **dadurch gekennzeichnet, dass** eine Milchtransportvorrichtung (74) umfasst ist, dessen Luftdruckausgleichsöffnung (76) mit einer Sterilluft-Filteranlage (64) verbunden ist, wobei bevorzugt die Milchtransportvorrichtung (74) eine Milchkühlvorrichtung (124) aufweist, die die Rohmilch auf <5°C abkühlt.

7. Melkanlage (60) nach einem der vorhergehenden Ansprüche, **dadurch gekennzeichnet, dass** am Kopfbereich (18) des Zitzengummis (16) des Melkgeschirrs (10) ein ringförmiger Zitzenaufnahmebereich (36) mit einer Zitzenaufnahmeöffnung (48) als Ringraum (38) ausgebildet ist, und der Mündungsabschnitt (32) an einen Wandbereich (52) des Ringraums (38) angeordnet ist.

8. Melkanlage (60) nach einem der vorhergehenden Ansprüche, **dadurch gekennzeichnet, dass** der Saugbereich (20) des Zitzengummis (16) des Melkgeschirrs (10) beginnend vom Kopfbereich (18) zumindest bereichsweise konisch und in Richtung Milchschlauchanschluss (26) verjüngend ausgeformt ist.

9. Melkanlage (60) nach einem der vorhergehenden Ansprüche, **dadurch gekennzeichnet, dass** der Mündungsabschnitt (32) des Melkgeschirrs (10) eine Düse (40) zur gerichteten Sterilluftführung in Richtung einer Zitzenaufnahmeöffnung (48) umfasst.

10. Melkanlage (60) nach einem der vorhergehenden Ansprüche, **dadurch gekennzeichnet, dass** die Sterilluft-Druckleitung (34) des Melkgeschirrs (10) an einem Außenwandabschnitt (54) des Bechergehäuses (14) geführt und befestigt bzw. im Außenwandabschnitt integriert ist.

11. Melkanlage (60) nach einem der vorhergehenden Ansprüche, **dadurch gekennzeichnet, dass** eine Sterilluft-Verteilereinheit (42) des Melkgeschirrs (10) mit einem Sterilluft-Zentraldruckleitungsanschluss (44) an einer Milchsammeleinrichtung (46) angeordnet ist, von der eine Sterilluft-Druckleitung (34) zu jedem Zitzenbecher (12) abzweigt.

12. Melkanlage (60) nach einem der vorhergehenden Ansprüche mit einem Zitzengummi (16), wobei der Zitzengummi (16) einen Kopfbereich (18) und einen Saugbereich (20) aufweist, **dadurch gekennzeichnet, dass** am Kopfbereich (18) des Zitzengummis (16) des Melkgeschirrs (10) ein Mündungsabschnitt (32) für eine Sterilluft-Druckleitung (34) angeordnet ist, wobei der Kopfbereich (18) bevorzugt einen ringförmigen Zitzenaufnahmebereich (36) als Ringraum (38) aufweist, an dessen Wandung (52) der Mündungsabschnitt (32) angeordnet ist, und wobei bevorzugt der Saugbereich (20) zumindest abschnittsweise beginnend vom Kopfbereich (18) konisch verjüngt ist.

13. Melkanlage (60) nach Anspruch 12, **dadurch gekennzeichnet, dass** in einem Wandungsabschnitt des Ringraums (38) ein Überdruckventil (58) angeordnet ist oder dass ein die Zitzenaufnahmeöffnung (48) umgebender Wandabschnitt (56) des Ringraums (38) eine derartige Elastizität aufweist, dass bei eingeführter Zitze eine Überdruckventilfunktion bereitgestellt wird, oder dass ein Radius (Rz) der Zitzenaufnahmeöffnung (48) größer als ein durchschnittlicher Zitzenradius ist.

14. Verfahren zur Verwendung und Cleaning-in-Place Reinigung eines Melkgeschirrs (10) einer Melkanlage (60) nach einem der Ansprüche 1 bis 11, umfassend die Schritte:
- bei Beendigung eines Melkvorgangs Abschalten des Fluidabsaug-Volumenstroms (Vm) und des Pulsations-Volumenstroms (Vp), so dass ein Zitzenbecher (12) von einer Zitze abfällt;
- Wiedereinschalten zumindest des Fluidabsaug-Volumenstroms (Vm);
- Einführung einer zu melkenden Zitze und Beginn eines weiteren Melkvorgangs;
**dadurch gekennzeichnet, dass** kontinuierlich ein Sterilluft-Volumenstrom (Vs) größer als ein Fluidabsaug-Volumenstrom (Vm) am Kopfbereich (18) des Zitzenbechers (12) zugeführt wird, so dass sich eine Sterilluft-Überlagerung (84) an der Zitzenaufnahmeöffnung (48) einstellt.

15. Verfahren nach Anspruch 14, **gekennzeichnet durch** einen Zwischenschritt, dass nach der Beendigung des Melkvorgangs die Zitzenaufnahmeöffnung (48) des Melkgeschirrs (10) durch einen fluiddichten Verschlussstopfen (50) zu Reinigungszwecken verschlossen wird.

## Claims

1. A milking installation (60) comprising at least one milking cluster (10) with at least one, in particular four teat cups (12), wherein each teat cup (12) comprises a cup housing (14) and, accommodated in the cup housing (14), a teat cup liner (16) with a top region (18) and a suction region (20), wherein a connection (26) for a milk tube (24) is arranged at the cup bottom (22) or at the end of the suction region (20) of the teat cup liner (16), and a connection (28) for a pulsator line (30) is preferably arranged on a wall or bottom portion of the cup housing (14), and a mouth portion (32) of a sterile air pressure line (34) is arranged in the top region (18) of the teat cup liner (16), through which pressure line sterile air can be introduced at a volumetric flow rate (Vs) greater than a fluid aspiration volumetric flow rate (Vm) at the milk tube (24), such that a sterile air blanket (84) can be established in the top region (18) of the teat cup liner (16), **wobei** at least one central sterile air pressure line (62) with at least one sterile air filter installation (64) is included, by which each sterile air pressure line (34) of the milking cluster (10) is centrally supplied with sterile air, such that a sterile air volumetric flow rate (Vs) can be established in each sterile air pressure line (34) which is higher than a fluid aspiration volumetric flow rate (Vm) in each milk tube (24), whereby a sterile air blanket (84) can be established in each teat cup (12).

2. A milking installation (60) according to claim 1, **characterised in that** the sterile air filter installation (64) comprises an EPA/HEPA or ULPA filter unit (66) with a filter of class H13 or higher and **in that** the sterile air filter installation (64) preferably comprises a controllable sterile air compressor unit (68).

3. A milking installation (60) according to claim 1 or 2, **characterised in that** the sterile air volumetric flow rate (Vs) is established such that an atmospheric overpressure of sterile air of at least 5 kPa, in particular of at least 10 kPa, is established in the annular chamber (38) of the teat cup (12) of the milking cluster (10) in order to produce the sterile air blanket (84) .

4. A milking installation (60) according to one of the preceding claims, **characterised in that** a central milk collection line (94) is included to which the milk tube (24) of each milking cluster (10) is connected and which central milk collection line is guided through a continuous-flow milk chiller (78) which chills the raw milk to <5°C.

5. A milking installation (60) according to one of the preceding claims, **characterised in that** a milk collection tank (70) is included, the air pressure equalisation opening (72) of which is connected to a sterile air filter installation (64), wherein a milk chiller (124) which chills the raw milk to <5°C is preferably included in the milk collection tank (70).

6. A milking installation (60) according to one of the preceding claims, **characterised in that** a milk transporter (74) is included, the air pressure equalisation opening (76) of which is connected to a sterile air filter installation (64), wherein a milk chiller (124) which chills the raw milk to <5°C is preferably included in the milk transporter (74).

7. A milking installation (60) according to one of the preceding claims, **characterised in that** an annular teat accommodation region (36) with a teat accommodation opening (48) is formed as an annular chamber (38) at the top region (18) of the teat cup liner (16) of the milking cluster (10), and the mouth portion (32) is arranged on a wall region (52) of the annular chamber (38).

8. A milking installation (60) according to one of the preceding claims, **characterised in that** the suction region (20) of the teat cup liner (16) of the milking cluster (10) tapers conically at least in regions starting from the top region (18) and towards the milk tube connection (26).

9. A milking installation (60) according to one of the preceding claims, **characterised in that** the mouth portion (32) of the milking cluster (10) comprises a nozzle (40) for oriented sterile air guidance towards a teat accommodation opening (48).

10. A milking installation (60) according to one of the preceding claims, **characterised in that** the sterile air pressure line (34) of the milking cluster (10) is guided and fastened to an outer wall portion (54) of the cup housing (14) or is integrated in the outer wall portion.

11. A milking installation (60) according to one of the preceding claims, **characterised in that** a sterile air distributor unit (42) of the milking cluster (10) with a central sterile air pressure line connection (44) is arranged on a claw (46), from which a sterile air pressure line (34) branches off to each teat cup (12).

12. A milking installation (60) according to one of the preceding claims with a teat cup liner (16), the teat cup liner (16) comprising a top region (18) and a suction region (20), **characterised in that a** mouth portion (32) for a sterile air pressure line (34) is arranged at the top region (18) of the teat cup liner (16) of the milking cluster (10), wherein the top region (18) preferably comprises an annular teat accommodation region (36) as an annular chamber (38), on the wall (52) of which the mouth portion (32) is arranged, and wherein the suction region (20) preferably tapers conically at least in portions starting from the top region (18).

13. A milking installation (60) according to claim 12, **characterised in that** a pressure relief valve (58) is arranged in a wall portion of the annular chamber (38) or **in that** a wall portion (56) of the annular chamber (38) surrounding the teat accommodation opening (48) has a resilience such that, when a teat is inserted, a pressure relief valve function is provided, or **in that** a radius (Rz) of the teat accommodation opening (48) is greater than an average teat radius.

14. A method for use and clean-in-place cleaning of a milking cluster (10) of a milking installation (60) according to one of claims 1 to 11, comprising the steps of:
- on completion of a milking process, switching off the fluid aspiration volumetric flow (Vm) and the pulsation volumetric flow (Vp), such that a teat cup (12) drops off a teat;
- switching at least the fluid aspiration volumetric flow (Vm) back on;
- introducing a teat to be milked and starting a further milking process;
**characterised in that** a sterile air volumetric flow rate (Vs) which is greater than a fluid aspiration volumetric flow rate (Vm) is continuously supplied to the top region (18) of the teat cup (12), such that a sterile air blanket (84) is established at the teat accommodation opening (48).

15. A method according to claim 14, **characterised by** an intermediate step that, once the milking process is complete, the teat accommodation opening (48) of the milking cluster (10) is closed for cleaning purposes by a fluid-tight sealing stopper (50).

## Revendications

1. Installation de traite (60) comprenant au moins un faisceau trayeur (10) avec au moins un, notamment quatre gobelets trayeurs (12), sachant que chaque gobelet trayeur (12) présente un étui (14) et un manchon trayeur (16) logé dans l'étui (14) avec une zone supérieure (18) et une zone de succion (20), sachant qu'au fond du gobelet (22) ou sur l'extrémité de la zone de succion (20) du manchon trayeur (16) est disposé un raccord (26) pour un tuyau à lait (24) et que de préférence, un raccord (28) pour un tuyau de pulsateur (30) est disposé sur une section de la paroi ou du fond de l'étui (14) et que dans la zone supérieure (18) du manchon trayeur (16) est disposée une embouchure (32) d'une conduite de refoulement d'air stérile (34) à travers laquelle de l'air stérile est introduisible avec un débit volumétrique (Vs) supérieur à un débit volumétrique d'aspiration de fluide (Vm) sur le tuyau à lait (24) de telle sorte qu'un recouvrement par de l'air stérile (84) est réglable dans la zone supérieure (18) du manchon trayeur (16), sachant qu'est compris au moins une conduite centrale de refoulement d'air stérile (62) avec au moins une installation de filtration à air stérile (64) à travers laquelle chaque conduite de refoulement d'air stérile (34) du faisceau trayeur (10) est alimentée en air stérile de manière centralisée de telle sorte qu'un débit volumétrique d'air stérile (Vs) est réglable dans chaque conduite de refoulement d'air stérile (34), lequel débit volumétrique est supérieur à un débit volumétrique d'aspiration de fluide (Vm) dans chaque tuyau à lait (24), grâce à quoi un recouvrement par de l'air stérile (84) est réglable dans chaque gobelet trayeur (12).

2. Installation de traite (60) selon la revendication 1, **caractérisée en ce que** l'installation de filtration à air stérile (64) comprend une unité filtrante EPA/HEPA ou ULPA (66) avec une classe de filtration H13 ou plus et que l'installation de filtration de l'air stérile (64) comprend de préférence une unité de compresseur d'air stérile régulable (68).

3. Installation de traite (60) selon la revendication 1 ou 2, **caractérisée en ce que** le débit volumétrique d'air stérile (Vs) est réglé de sorte à ce que survienne dans l'espace annulaire (38) du gobelet trayeur (12) du faisceau trayeur (10) une surpression atmosphérique de l'air stérile d'au moins 5 kPa, notamment d'au moins 10 kPa, pour créer le recouvrement par de l'air stérile (84).

4. Installation de traite (60) selon une des revendications précédentes, **caractérisée en ce qu'**est compris un lactoduc (94) auquel est raccordé le tuyau à lait (24) de chaque faisceau trayeur (10) et qui est conduit à travers un dispositif de refroidissement du lait (78) en continu qui refroidit le lait cru à une température <5 °C.

5. Installation de traite (60) selon une des revendications précédentes, **caractérisée en ce qu'**est compris un tank à lait (70) dont l'orifice de compensation de la pression atmosphérique (72) est relié à une installation de filtration à air stérile (64), sachant qu'est compris de préférence dans le tank à lait (70) un dispositif de refroidissement du lait (124) qui refroidit le lait à une température <5 °C.

6. Installation de traite (60) selon une des revendications précédentes, **caractérisée en ce qu'**est compris un dispositif de transport du lait (74) dont l'orifice de compensation de la pression atmosphérique (76) est relié à une installation de filtration à air stérile (64), sachant que de préférence, le dispositif de transport du lait (74) présente un dispositif de refroidissement du lait (124) qui refroidit le lait à une température <5 °C.

7. Installation de traite (60) selon une des revendications précédentes, **caractérisée en ce que** dans la zone supérieure (18) du manchon trayeur (16) du faisceau trayeur (10), une zone de réception du trayon (36) de forme annulaire avec une ouverture de réception du trayon (48) est conçue sous forme d'espace annulaire (38) et que l'embouchure (32) est disposée sur une zone de la paroi (52) de l'espace annulaire (38).

8. Installation de traite (60) selon une des revendications précédentes, **caractérisée en ce que** la zone de succion (20) du manchon trayeur (16) du faisceau trayeur (10) présente une forme au moins partiellement conique en partant de la zone supérieure (18) et se rétrécit en direction du raccord du tuyau à lait (26).

9. Installation de traite (60) selon une des revendications précédentes, **caractérisée en ce que** l'embouchure (32) du faisceau trayeur (10) comprend une buse (40) pour conduire de manière ciblée l'air stérile en direction de l'ouverture de réception du trayon (48).

10. Installation de traite (60) selon une des revendications précédentes, **caractérisée en ce que** la conduite de refoulement d'air stérile (34) du faisceau trayeur (10) est posée et fixée sur une section de la paroi extérieure (54) de l'étui (14) ou intégrée dans la section de la paroi extérieure.

11. Installation de traite (60) selon une des revendications précédentes, **caractérisée en ce qu'**une unité de répartition de l'air stérile (42) du faisceau trayeur (10) avec un raccord de conduite centrale de refoulement d'air stérile (44) est disposée sur un collecteur de lait (46) duquel part une conduite de refoulement d'air stérile (34) en direction de chaque manchon trayeur (12).

12. Installation de traite (60) selon une des revendications précédentes avec un manchon trayeur (16), sachant que le manchon trayeur (16) présente une zone supérieure (18) et une zone de succion (20), **caractérisée en ce qu'**une embouchure (32) pour une conduite de refoulement d'air stérile (34) est disposée au niveau de la zone supérieure (18) du manchon trayeur (16) du faisceau trayeur (10), sachant que la zone supérieure (18) présente de préférence une zone de réception du trayon (36) de forme annulaire sous forme d'espace annulaire (38), sur la paroi (52) de laquelle est disposée l'embouchure (32) et sachant que de préférence, la zone de succion (20) est rétrécie coniquement au moins partiellement en partant de la zone supérieure (18).

13. Installation de traite (60) selon la revendication 12, **caractérisée en ce qu'**une soupape de surpression (58) est disposée dans une section de la paroi de l'espace annulaire (38) ou qu'une section de la paroi (56) de l'espace annulaire (38), entourant l'ouverture de réception du trayon (48) présente une élasticité telle qu'une fonction de soupape de surpression est fournie lorsque le trayon est introduit ou qu'un rayon (Rz) de l'ouverture de réception du trayon (48) est supérieur à un rayon de trayon moyen.

14. Procédé destiné à l'utilisation et au nettoyage Cleaning-in-Place d'un faisceau trayeur (10) d'une installation de traite (60) selon une des revendications 1 à 11, comprenant les étapes suivantes :
- à la fin d'une opération de traite, coupure du débit volumétrique d'aspiration de fluide (Vm) et du débit volumétrique de pulsation (Vp) de sorte qu'un manchon trayeur (12) se détache d'un trayon ;
- réactivation au moins du débit volumétrique d'aspiration de fluide (Vm) ;
- introduction d'un trayon à traire et début d'une autre opération de traite ;
**caractérisé en ce qu'**un débit volumétrique d'air stérile (Vs) supérieur à un débit volumétrique d'aspiration de fluide (Vm) est fourni en permanence sur la zone supérieure (18) du manchon trayeur (12) de sorte qu'un recouvrement par de l'air stérile (84) survient sur l'ouverture de réception du trayon (48).

15. Procédé selon la revendication 14, **caractérisé en** une étape intermédiaire telle qu'une fois l'opération de traite terminée, l'ouverture de réception du trayon (48) du faisceau trayeur (10) est fermée par un bouchon étanche aux fluides (50) à des fins de nettoyage.
